# EUROPEAN PATENT APPLICATION

(11) **EP 4 432 721 A1**
(43) Date of publication of application: **18.09.2024**
(21) Application number: 22914455.5
(22) Date of filing: 21.12.2022
(51) Int. Cl.: H04W 24/02

(54) **COMMUNICATION METHOD AND APPARATUS**

(30) Priority: 31.12.2021 CN 202111667142
(71) Applicant: Huawei Technologies Co., Ltd., Shenzhen, Guangdong 518129 (CN)
(72) Inventor: LI, Meng, Shenzhen, Guangdong 518129 (CN); XU, Shengfeng, Shenzhen, Guangdong 518129 (CN); YANG, Yanmei, Shenzhen, Guangdong 518129 (CN)
(74) Representative: Maiwald GmbH
(86) International application number: PCT/CN2022/140725
(87) International publication number: WO 2023/125201

(57) **Abstract**

Embodiments of this application provide a communication method and apparatus, and relate to the field of communication technologies. A network device determines to trigger a receive end of a first multicast/broadcast service MBS session to enter a radio resource control RRC connected state. The network device provides a service for the receive end. The network device may broadcast first information used to trigger the receive end to enter the RRC connected state, or pages the receive end. A first terminal receives the first information; and if the first terminal is in an idle state or an RRC inactive state, and the first terminal belongs to the receive end, the first terminal enters the RRC connected state based on the first information. The network device broadcasts the first information or pages the receive end. The receive end enters the RRC connected state only after receiving the first information or the paging, and is not in a state for a long time. In this manner, the network device may flexibly manage a multicast/broadcast service, and may trigger, based on broadcast information or paging, state adjustment of the receive end of the first MBS session.

## Description

### CROSS-REFERENCE TO RELATED APPLICATIONS

This application claims priority to Chinese Patent Application No. 202111667142.X, filed with the China National Intellectual Property Administration on December 31, 2021 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

For a problem that a multicast/broadcast service like a video has increasingly strong impact on a mobile communication network, the mobile communication network (for example, a 5th generation (5th generation, 5G) mobile communication network) effectively resolves the problem by supporting transmission of the multicast/broadcast service (multicast broadcast service, MBS).

Currently, the multicast/broadcast service may be transmitted in two manners: a protocol data unit (protocol data unit, PDU) session manner and an MBS session manner. The PDU session manner may be used to establish different resources for different user equipments (user equipments, UEs) to transmit the multicast/broadcast service. Alternatively, the MBS session manner is used to establish a same resource for different UEs to transmit the multicast/broadcast service. However, no solution is provided for how to specifically perform the multicast/broadcast service. Therefore, how to better manage the multicast/broadcast service becomes an urgent problem to be resolved.

### SUMMARY

This application provides a communication method and apparatus, to flexibly manage a multicast/broadcast service in a multicast/broadcast service scenario, and improve data processing efficiency of a network device.

According to a first aspect, this application provides a communication method. The method may be performed by a network device or a terminal, or may be performed through interaction between a network device and a terminal. The network device may be a transmission reception point (transmission reception point, TRP), a 5G base station (gNodeB, gNB), a mobility management function (access and mobility management function, AMF), a chip, or the like. The terminal may be a UE, a vehicle-mounted device, a chip of a terminal, or the like. This is not specifically limited herein in this application.

A network device determines to trigger a receive end of a first MBS session to enter a radio resource control (radio resource control, RRC) connected state. The network device is configured to broadcast first information used to trigger the receive end to enter the RRC connected state, or page the receive end. A first terminal receives the first information; and if the first terminal is in an idle state or an RRC inactive state, and the first terminal belongs to the receive end, enters the RRC connected state based on the first information.

It should be noted that the receive end of the first MBS session may be understood as a terminal that receives service data through the first MBS session, that is, a terminal that receives service data of the first MBS session, or may be understood as a terminal that accesses the first MBS session. The first receive end may be one or more terminals. This is not specifically limited in this application. Service data of an MBS session is service data supported by the MBS session, or service data transmitted through the MBS session. The service data is MBS data.

In this application, the receive end of the first MBS session enters the RRC connected state only after receiving broadcast information or paging from the network device, but does not adjust to the RRC connected state independently. In this manner, the network device can flexibly manage and control the multicast/broadcast service. In addition, the network device triggers the receive end of the first MBS session to enter the RRC connected state. Compared with a case in which the receive end of the first MBS session enters the RRC connected state, data processing efficiency is higher.

In an optional manner, the first information includes identification information of the first MBS session and/or first indication information. The first indication information indicates that the receive end of the first MBS session is allowed to enter the RRC connected state.

It should be noted that the first information may include the identification information of the first MBS session. If a terminal that receives the first information is the receive end of the first MBS session, the terminal enters the RRC connected state. The first information may alternatively include the first indication information. If a terminal that receives the first information knows that the first indication information is specific to the receive end of the first MBS session, and the terminal is the receive end of the first MBS session, the terminal enters the RRC connected state. The first information may further include the identification information of the first MBS session and the first indication information. If a terminal that receives the first information is the receive end of the first MBS session, the terminal enters the RRC connected state. In this manner, it may be clearly learned that the receive end of the first MBS session enters the RRC connected state, but not all terminals enter the RRC connected state.

In an optional manner, the network device sends a paging message, where the paging message carries a temporary mobile group identity (temporary multicast group identifier, TMGI) corresponding to the first MBS session.

In this manner, a procedure in a conventional solution may be reused as much as possible when the network device sends the paging message, to trigger the receive end of the first MBS session to enter the RRC connected state without increasing procedure complexity.

In an optional manner, the network device is an access network device or a mobility management network element.

In an optional manner, when a first preset condition is met, the network device determines to trigger the receive end of the first MBS session to enter the RRC connected state. Alternatively, when a first preset condition is met and there is at least one terminal that is in an idle state or an RRC inactive state in the receive end, the network device determines to trigger the receive end of the first MBS session to enter the RRC connected state.

It should be noted that when the first preset condition is met, the network device may directly determine, without performing another determining, to trigger the receive end of the first MBS session to enter the RRC connected state. However, when the first preset condition is met, the receive end of the first MBS session may be already in the RRC connected state. The network device still broadcasts the first information, so that resources are wasted. Therefore, the network device may determine, when the first preset condition is met and there is at least one terminal that is in the idle state or the RRC inactive state in the receive end of the first MBS session, to trigger the receive end of the first MBS session to enter the RRC connected state. In this manner, the network device may send the first information as required, so that processing resources of the network device are saved. For example, when the receive end of the first MBS session receives other service data (not the service data of the first MBS session), and the receive end still needs to be in the RRC connected state, the network device may not broadcast the first information.

In an optional manner, the first preset condition includes one or more of the following:
load of the network device is lower than a preset threshold;
the receive end of the first MBS session triggers a cross-network device handover procedure;
a service requirement of the first MBS session changes;
a priority of the first MBS session is higher than a preset value;
a reliability requirement of the first MBS session is higher than a first threshold;
a delay of the first MBS session is lower than a second threshold; and
an allocation and retention priority (allocation and retention priority, ARP) of the first MBS session is lower than a third threshold.

The reliability requirement of the first MBS session is a reliability requirement of a 5G QoS identifier (the 5th generation quality of service identifier, 5QI) that is of a quality of service (quality of service, QoS) flow of the first MBS session and whose reliability requirement is the highest. The delay of the first MBS session is a delay of a 5QI that is of a QoS flow of the first MBS session and whose delay is the lowest. The ARP of the first MBS session is an ARP of a QoS flow that is of the first MBS session and whose ARP is the lowest.

With reference to the first preset condition, the network device may know when to broadcast the first information or when to page the receive end of the first MBS session, so as to trigger the receive end of the first MBS session to enter the RRC connected state.

In an optional manner, the network device sends second information, where the second information is used to trigger the receive end to enter the idle state or the RRC inactive state. The first terminal receives the second information. If the first terminal is in the RRC connected state, and the first terminal belongs to the receive end, the first terminal enters the idle state or the RRC inactive state based on the second information. A state of the receive end of the first MBS session is adjusted based on the second information. This manner facilitates management of the multicast/broadcast service by the network device.

In an optional manner, the first terminal enters the idle state or the RRC inactive state based on the second information. Because the first terminal is the receive end of the first MBS session, after receiving the second information and before entering the idle state or the RRC inactive state, the first terminal further needs to release an RRC connection.

In an optional manner, the second information includes the identification information of the first MBS session and/or second indication information. The second indication information indicates that the receive end of the first MBS session is allowed to enter the idle state or the RRC inactive state.

It should be noted that the second information may include the identification information of the first MBS session. If a terminal that receives the second information is the receive end of the first MBS session, the terminal enters the idle state or the RRC inactive state. The second information may alternatively include the second indication information. If a terminal that receives the second information knows that the second indication information is specific to the receive end of the first MBS session, and the terminal is the receive end of the first MBS session, the terminal enters the idle state or the RRC inactive state. The second information may further include the identification information of the first MBS session and the second indication information. If a terminal that receives the second information is the receive end of the first MBS session, the terminal enters the idle state or the RRC inactive state. In this manner, it may be clearly learned that the receive end of the first MBS session enters the idle state or the RRC inactive state, but not all terminals enter the idle state or the RRC inactive state.

In an optional manner, the network device broadcasts third information, where the third information is used to notify the receive end that entering the RRC connected state is prohibited or receiving the service data of the first MBS session in the idle state or the RRC inactive state is allowed. The first terminal receives the third information. If the first terminal is in the idle state or the RRC inactive state, and the first terminal belongs to the receive end, the first terminal does not enter the RRC connected mode based on the third information. Alternatively, if the first terminal is in the idle state or the RRC inactive state, and the first terminal belongs to the receive end, the first terminal receives the service data of the first MBS session in the idle state or the RRC inactive state based on the third information.

In this application, a state of the receive end of the first MBS session is flexibly adjusted based on the broadcast information. This manner facilitates management of the multicast/broadcast service by the network device.

In an optional manner, the third information includes the identification information of the first MBS session and/or third indication information. The third indication information indicates that the receive end of the first MBS session is prohibited from entering the RRC connected state, or that the receive end of the first MBS session is allowed to receive the service data of the first MBS session in the idle state or the RRC inactive state.

It should be noted that the third information may include the identification information of the first MBS session. If a terminal that receives the third information is the receive end of the first MBS session, the terminal does not enter the RRC connected state, or receives the service data of the first MBS session in the idle state or the RRC inactive state. The third information may alternatively include the third indication information. If a terminal that receives the third information knows that the third indication information is specific to the receive end of the first MBS session, and the terminal is the receive end of the first MBS session, the terminal does not enter the RRC connected state, or receives the service data of the first MBS session in the idle state or the RRC inactive state. The third information may further include the identification information of the first MBS session and the third indication information. If a terminal that receives the third information is the receive end of the first MBS session, the terminal does not enter the RRC connected state, or receives the service data of the first MBS session in the idle state or the RRC inactive state. In this manner, it may be clearly learned that the receive end of the first MBS session does not enter the RRC connected state, or receives the service data of the first MBS session in the idle state or the RRC inactive state.

In an optional manner, the network device broadcasts fourth information, where the fourth information is used to notify that a terminal that does not access a network is prohibited from joining in any MBS session or the first MBS session, or a terminal that does not join in any MBS session is prohibited from joining in any MBS session or the first MBS session, or a terminal that does not join in the first MBS session is prohibited from joining in the first MBS session. The second terminal receives the fourth information. If the second terminal does not access the network, the second terminal does not send, based on the fourth information, a request for joining in any MBS session or the first MBS session. Alternatively, if the second terminal does not join in any MBS session, the second terminal does not send, based on the fourth information, a request for joining in any MBS session or the first MBS session. Alternatively, if the second terminal does not join in the first MBS session, the second terminal does not send, based on the fourth information, a request for joining in the first MBS session.

In this application, after receiving the fourth information, the second terminal does not send the request for joining in any MBS session or the first MBS session. Even if the second terminal sends the request for joining in any MBS session or the first MBS session to the access network device or the mobility management network element, the access network device or the mobility management network element rejects the request. In this manner, a case in which the second terminal frequently sends a request for joining in an MBS session can be reduced, and processing resources of the second terminal can be further saved.

In an optional manner, the fourth information includes join prohibition indication information. The join prohibition indication information indicates that joining in any MBS session is prohibited. It should be noted that the fourth information includes the join prohibition indication information, and the network device does not allow the terminal to join in any MBS session.

In an optional manner, the fourth information includes an identifier of the first MBS session. It should be noted that the fourth information includes the identifier of the first MBS session, and the network device does not allow the terminal to join in the first MBS session.

According to a second aspect, an embodiment of this application provides a communication apparatus. The communication apparatus may be a network device (for example, the network device in the first aspect), or a chip disposed inside a network device, or may be a terminal (for example, the first terminal or the second terminal in the first aspect), or a chip disposed inside a terminal. The communication apparatus has a function of implementing any one of the aspects of the first aspect. For example, the communication apparatus includes a corresponding module, unit, or means (means) for performing steps in any one of the aspects of the first aspect. The function, unit or means may be implemented by software, may be implemented by hardware, or may be implemented by hardware executing corresponding software.

In a possible design, the communication apparatus includes a processing unit and a transceiver unit. The transceiver unit may be configured to send/receive a signal, to implement communication between the communication apparatus and another apparatus. For example, the transceiver unit is configured to receive configuration information from a terminal device. The processing unit may be configured to perform some internal operations of the communication apparatus. The transceiver unit may be referred to as an input/output unit, a communication unit, or the like. The transceiver unit may be a transceiver. The processing unit may be a processor. When the communication apparatus is a module (for example, a chip) in a communication device, the transceiver unit may be an input/output interface, an input/output circuit, an input/output pin, or the like, and may alternatively be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to receive and send a signal, and the processor executes program instructions, to complete the method in any one of the possible designs or implementations of the first aspect. The communication apparatus may further include one or more memories. The memory may be coupled to the processor, and the memory may store necessary computer programs or instructions for implementing the function in any one of the aspects of the first aspect. The processor may execute the computer programs or the instructions stored in the memory. When the computer programs or the instructions are executed, the communication apparatus is enabled to implement the method according to any one of the possible designs or implementations of the first aspect.

In still another possible design, the communication apparatus includes a processor, and the processor may be configured to be coupled to a memory. The memory may store necessary computer programs or instructions for implementing the function in any one of the aspects of the first aspect. The processor may execute the computer programs or the instructions stored in the memory. When the computer programs or the instructions are executed, the communication apparatus is enabled to implement the method according to any one of the possible designs or implementations of the first aspect.

In another possible design, the communication apparatus includes a processor and an interface circuit. The processor is configured to: communicate with another apparatus by using the interface circuit, and perform the method according to any one of the possible designs or implementations of the first aspect.

It may be understood that in the second aspect, the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a third aspect, an embodiment of this application provides a communication system. The communication system includes the network device and the terminal in the first aspect.

According to a fourth aspect, this application provides a chip system. The chip system includes a processor, and may further include a memory, configured to implement the method according to any one of the possible designs of the first aspect. The chip system may include a chip, or may include a chip and another discrete component.

According to a fifth aspect, this application further provides a computer-readable storage medium. The computer-readable storage medium stores computer-readable instructions, and when the computer-readable instructions are run on a computer, the computer is enabled to perform the method according to any one of the possible designs of the first aspect.

According to a sixth aspect, this application provides a computer program product including instructions. When the computer program product runs on a computer, the computer is enabled to perform the method according to any one of the embodiments of the first aspect.

For technical effects that can be achieved in the second aspect to the sixth aspect, refer to descriptions of technical effects that can be achieved in the corresponding possible design solutions in the first aspect. Details are not described herein again in this application.

### BRIEF DESCRIPTION OF DRAWINGS

FIG. 1 is a diagram of a communication system;
FIG. 2 is a schematic flowchart of a communication method according to an embodiment of this application;
FIG. 3A and FIG. 3B are a schematic flowchart of another communication method according to an embodiment of this application;
FIG. 4 is a schematic flowchart of still another communication method according to an embodiment of this application;
FIG. 5A and FIG. 5B are a schematic flowchart of yet another communication method according to an embodiment of this application;
FIG. 6 is a diagram of a structure of a communication apparatus according to an embodiment of this application;
FIG. 7 is a diagram of a structure of another communication apparatus according to an embodiment of this application; and
FIG. 8 is a diagram of a structure of another communication apparatus according to an embodiment of this application.

### DESCRIPTION OF EMBODIMENTS

To make objectives, technical solutions, and advantages of this application clearer, the following further describes this application in detail with reference to accompanying drawings. A specific operation method in a method embodiment may also be applied to an apparatus embodiment or a system embodiment. In the descriptions of this application, unless otherwise specified, a plurality of means two or more than two. Therefore, for implementations of the apparatus and the method, reference may be made to each other, and repeated parts are not described again.

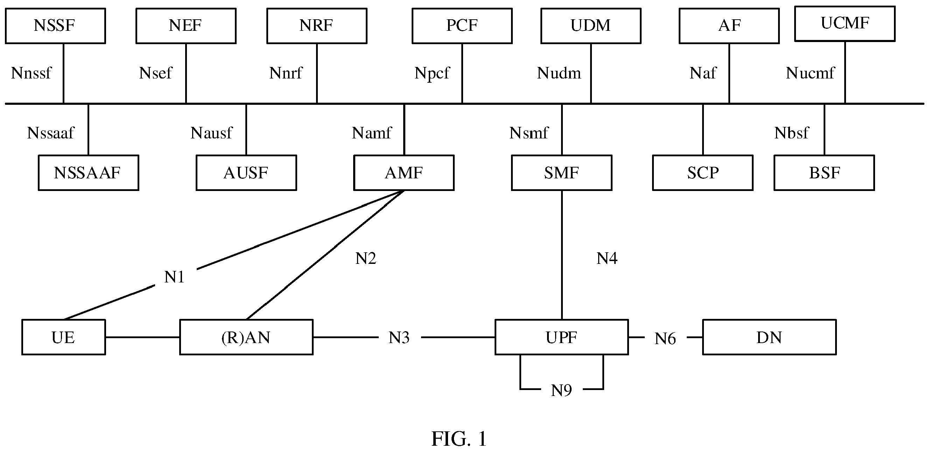

FIG. 1 is a diagram of a mobile communication network architecture. The network architecture includes a terminal device, an access network device, an access and mobility management function, a session management function, a user plane function, a policy control function, a network slice selection function, a network slice-specific authentication and authorization function, a network repository function, a network data analytics function, a unified data management function, a unified data storage function, an authentication server function, a network exposure function, a terminal radio capability management function, a binding support function, an application function, and a data network (data network, DN) connected to an operator network. The terminal device may access a wireless network through an access node at a current location. The terminal device may send service data to the data network and receive service data from the data network through the access network device and the user plane function.

The access and mobility management function is mainly used for attachment, mobility management, a tracking area update procedure, and the like of a terminal device in a mobile network. In a 5G communication system, the access and mobility management function may be an access and mobility management function (access and mobility management function, AMF). In a future communication system (for example, a 6G communication system), the access and mobility management function may still be an AMF, or may have another name. This is not limited in this application.

The session management function is mainly used for session management in a mobile network, for example, session establishment, modification, and release. A specific function is, for example, allocating an Internet protocol address to the terminal device, and selecting a user plane function that provides a packet forwarding function. In the 5G communication system, the session management function may be a session management function (session management function, SMF). In the future communication system (for example, the 6G communication system), the session management function may still be an SMF, or may have another name. This is not limited in this application.

The user plane function is mainly used to process a user packet, for example, forwarding and charging. In the 5G communication system, the user plane function may be a user plane function (user plane function, UPF). In the future communication system (for example, the 6G communication system), the user plane function may still be a UPF, or may have another name. This is not limited in this application.

The policy control function includes a policy control function, a charging policy control function, QoS control, and the like. In the 5G communication system, the policy control function may be a policy control function (policy control function, PCF). In the future communication system (for example, the 6G communication system), the policy control function may still be a PCF, or may have another name. This is not limited in this application.

The network slice selection function is mainly used to select an appropriate network slice for a service of the terminal device. In the 5G communication system, the network slice selection function may be a network slice selection function (network slice selection function, NSSF). In the future communication system (for example, the 6G communication system), the network slice selection function may still be an NSSF, or may have another name. This is not limited in this application.

The network slice-specific authentication and authorization function (network slice-specific authentication and authorization function, NSSAAF) is used for authentication and authorization of the terminal device to access a specific network slice.

The network repository function is mainly used to provide registration and discovery of a network function or a service provided by the network function. In the 5G communication system, the network repository function may be a network repository function (network repository function, NRF). In the future communication system (for example, the 6G communication system), the network repository function may still be an NRF, or may have another name. This is not limited in this application.

The network data analytics function may collect data from each network function, for example, the policy control function, the session management function, the user plane function, the access management function, and the application function (through the network exposure function), and perform analytics and prediction. In the 5G communication system, the network data analytics function may be a network data analytics function (network data analytics function, NWDAF). In the future communication system (for example, the 6G communication system), the network data analytics function may still be an NWDAF, or may have another name. This is not limited in this application.

The unified data management function is mainly used to manage subscription information of the terminal device. In the 5G communication system, the unified data management function may be a unified data management (unified data management, UDM) function. In the future communication system (for example, the 6G communication system), the unified data management function may still be a UDM function, or may have another name. This is not limited in this application.

The unified data repository function is mainly used to store structured data information, including subscription information, policy information, and network data or service data defined in a standard format. In the 5G communication system, the unified data repository function may be a unified data repository (unified data repository, UDR) function. In the future communication system (for example, the 6G communication system), the unified data repository function may still be a UDR function, or may have another name, this is not limited in this application.

The authentication server function is mainly used to perform security authentication on the terminal device. In the 5G communication system, the authentication server function may be an authentication server function (authentication server function, AUSF). In the future communication system (for example, the 6G communication system), the authentication server function network element may still be an AUSF, or may have another name. This is not limited in this application.

The network exposure function may expose some functions of a network to an application in a controlled manner. In the 5G communication system, the network exposure function may be an NEF. In the future communication system (for example, the 6G communication system), the network exposure function may still be an NEF, or may have another name. This is not limited in this application.

The terminal radio capability management function is used to store and manage a radio capability of a terminal device in a network. In the 5G communication system, the terminal radio capability management function may be a terminal radio capability management function (UE radio capability management function, UCMF). In the future communication system (for example, the 6G communication system), the terminal radio capability management function may still be an UCMF, or may have another name. This is not limited in this application.

The binding support function is used to maintain a correspondence between an Internet protocol (Internet Protocol, IP) address and a service function that are interconnected between user networks. In the 5G communication system, the binding support function may be a binding support function (binding support function, BSF). In the future communication system (for example, the 6G communication system), the binding support function may still be a BSF, or may have another name. This is not limited in this application.

The application function may provide service data of various applications for a control plane function in a communication network of an operator, or obtain data information and control information of a network from a control plane function in a communication network. In the 5G communication system, the application function may be an application function (application function, AF). In the future communication system (for example, the 6G communication system), the application function may still be an AF, or may have another name. This is not limited in this application.

The data network is mainly configured to provide a data transmission service for the terminal device. The data network may be a private network, for example, a local area network, may be a public data network (public data network, PDN), for example, an Internet (Internet), or may be a dedicated network jointly deployed by operators, for example, a configured IP multimedia network subsystem (IP multimedia network subsystem, IMS) service.

It should be noted that a function in embodiments of this application may alternatively be referred to as a network element, a network function, a function entity, a device, or the like. For example, the access and mobility management function may alternatively be referred to as an access and mobility management network element, an access and mobility management network function, an access and mobility management function entity, or the like. Names of the functions are not limited in this application, and a person skilled in the art may replace the names of the functions with other names to perform same functions, which all fall within the protection scope of this application.

After a UE registers with a network, connection management (connection management, CM) is performed on the UE, mainly including management of establishment and release of a non-access stratum (non-access stratum, NAS) signaling connection between the UE and the access and mobility management function (access and mobility management function, AMF). The NAS signaling connection includes two parts: a connection between the UE and an access network (access network, AN), and an N2 connection between the AN and the AMF. The NAS signaling connection between the UE and the AMF has two states: a CM-IDLE state (that is, an idle state) and a CM-CONNECTED state (that is, a connected state). To release an air interface resource as required and avoid a complex procedure, in the 5G system, a new connected-state substate, namely, a radio resource control inactive (RRC Inactive) state, is introduced for UE accessed by the 3rd Generation Partnership Project (3rd Generation Partnership Project, 3GPP). The radio resource control inactive state is referred to as the RRC inactive state for short.

Currently, a multicast/broadcast service may be transmitted in a PDU session manner and an MBS session manner. However, there is a problem of a waste of network resources. To carry a multicast service and ensure channel quality and data reliability, UE remains in an RRC connected state. If the UE is in the RRC connected state for a long time, scheduling resources of a base station are wasted. In addition, public safety (public safety) requires that one RAN support broadcast of 800 terminals. Because a current RAN capability is limited, simultaneously receiving multicast data by 800 users in a connected state may not be supported. However, no solution is provided for a specific case in which a service in a multicast/broadcast service is executed by a terminal. Therefore, how to better manage the multicast/broadcast service becomes an urgent problem to be resolved.

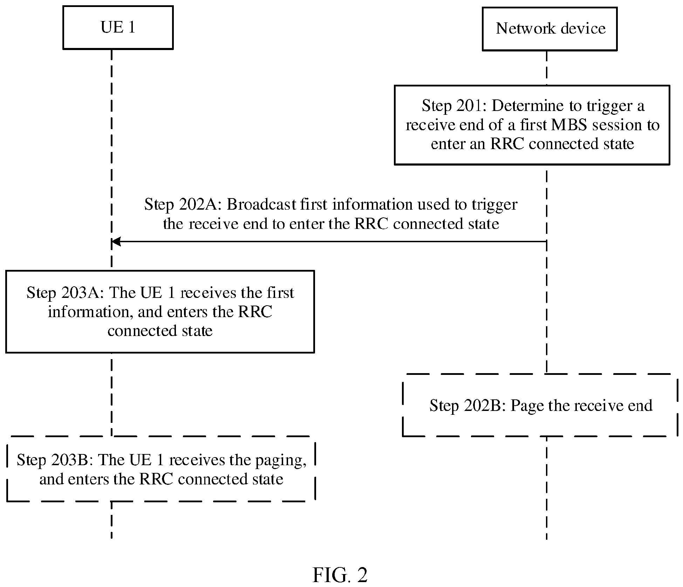

In view of this, as shown in FIG. 2, this application provides a communication method. The method may be performed by a network device, or may be performed by a terminal, or may be performed by both a network device and a terminal. The network device may be an access network device like a RAN device, or may be a mobility management network element like an AMF. This is not specifically limited herein in this application.

FIG. 2 is described by using an example in which the network device and the terminal jointly perform operations. It is assumed that the terminal is a UE 1. The UE 1 is a receive end of a first MBS session, and the UE 1 is merely used as an example of the receive end of the first MBS session. For another receive end of the first MBS session, refer to the descriptions of the UE 1 in FIG. 2. In addition, FIG. 2 is described by using an example in which the receive end of the first MBS session enters an RRC connected state. For entering the RRC connected state by a receive end of another MBS session, refer to the method for entering the RRC connected state by the receive end of the first MBS session. Details are not described herein again. The method shown in FIG. 2 is specifically described as follows.

Step 201: The network device determines to trigger the receive end of the first MBS session to enter the RRC connected state.

The receive end of the first MBS session may be a terminal that joins in the first MBS session through the network device. Specifically, before step 201, the receive end may send, to a core network device, a request message used to request to join in the first MBS session, where the request message may carry an identifier of the first MBS session. The request message may be a session modification request message.

It should be noted that the receive end of the first MBS session in this application may be understood as a terminal that receives service data through the first MBS session, namely, a terminal that receives the service data of the first MBS session, or may be understood as a terminal that already accesses the first MBS session. The receive end may be one or more terminals. This is not limited. Service data of an MBS session may be service data supported by the MBS session, or service data transmitted through the MBS session. The service data may be referred to as MBS data.

In addition, the network device in this application may be understood as a network side device that provides a service for the receive end of the first MBS session. The service may specifically include: session modification, session establishment, service data transmission of a session, session release, or the like. Specifically, the network device may be an access network device (which may be referred to as a RAN for short subsequently), or may be an access and mobility management network element.

In actual application, the network device may determine, based on a service requirement (for example, a multicast/broadcast service can be performed only when the receive end of the first MBS session is in the RRC connected state) of the first MBS session, a processing requirement (for example, the network device has abundant processing resources, and the receive end of the first MBS session is allowed to be in the RRC connected state) of the network device, and the like, to trigger the receive end of the first MBS session to enter the RRC connected state. This is not specifically limited.

It should be noted that, that the network device determines to trigger the receive end of the first MBS session to enter the RRC connected state may be understood as that the network device determines to trigger all terminals that join in the first MBS session of the network device to enter the RRC connected state. For example, a quantity of MBS sessions of a RAN 1 is 3. To be specific, 3 MBS sessions are established on the RAN 1, including an MBS session 1, an MBS session 2, and an MBS session 3. Terminals that join in the MBS session 1 through the RAN 1 include a UE 4, a UE 5, and a UE 6. The RAN 1 determines to trigger the UE 4, the UE 5, and the UE 6 to enter the RRC connected state.

Alternatively, that the network device determines to trigger the receive end of the first MBS session to enter the RRC connected state may be understood as that the network device determines to trigger one terminal (or some terminals) that joins in the first MBS session through the network device to enter the RRC connected state. Specifically, the network device may determine, based on priorities of receive ends of the first MBS session, to trigger a receive end with a highest priority in the receive ends of the first MBS session to enter the RRC connected state. This is not specifically limited herein in this application.

For example, a quantity of MBS sessions of a RAN 1 is 3. To be specific, 3 MBS sessions are established on the RAN 1, including an MBS session 1, an MBS session 2, and an MBS session 3. Terminals that join in the MBS session 1 through the RAN 1 include a UE 4 (with a priority of 1), a UE 5 (with a priority of 3), and a UE 6 (with a priority of 4). The RAN 1 determines to trigger the UE 4 (where the UE 4 has a highest priority (a protocol specifies that a larger priority value indicates a smaller priority, and 1<3<4)) to enter the RRC connected state. This is not specifically limited herein in this application.

Specifically, if one receive end (or some receive ends) of the first MBS session triggers cross-network device cell handover, or another service (a service that is not of the first MBS session) of the receive end needs to maintain reliable data transmission, the network device may determine to trigger these receive ends to enter the RRC connected state.

In addition, a "trigger" action in this application may be implemented by the RAN by sending a trigger message or trigger information to the receive end of the first MBS session. The trigger message or the trigger information may be existing, or may be newly added. Specifically, the trigger information may be carried in an existing message. This is not limited. For example, the RAN sends a notification message to the receive end of the first MBS session, where the notification message is used to notify or indicates the receive end of the first MBS session to enter the RRC connected state. For another example, the RAN sends an RRC configuration message or an RRC reconfiguration message to the receive end of the first MBS session, to trigger the receive end of the first MBS session to enter the RRC connected state. Further, the receive end of the first MBS session may enter the RRC connected state based on the trigger message or the trigger information.

Further, after determining to trigger the receive end of the first MBS session to enter the RRC connected state in step 201, step 202A and step 203A or step 202B and step 203B may be performed to trigger the receive end of the first MBS session to enter the RRC connected state.

Step 202A: The network device broadcasts first information used to trigger the receive end to enter the RRC connected state.

Correspondingly, the UE 1 receives the first information.

It should be noted that broadcasting may be performed by the access network device (for example, the RAN), or may be performed by the mobility management network element (for example, the AMF), or step 201 and step 202A may be performed by the access network device and the mobility management network element in a combined manner. For example, step 201 is performed by the access network device. Then, the access network device triggers the mobility management network element to broadcast the first information. This is not specifically limited.

Step 203A: The UE 1 receives the first information, and enters the RRC connected state.

The first information may be understood as the trigger message or the trigger information. In addition, the first information may alternatively be included in an SIB message. This is not limited in this application. The first information may specifically include one or more of the following information.

Information 1: identification information of the first MBS session.

The identification information of the first MBS session may be a TMGI corresponding to the first MBS session. After receiving the identification information of the first MBS session, the UE 1 may directly enter the RRC connected state.

Information 2: first indication information, where the first indication information indicates that the receive end of the first MBS session is allowed to enter the RRC connected state.

The first indication information may be a Boolean (Boolean) value, and 0 indicates that the receive end of the first MBS session is allowed to enter the RRC connected state (or in another implementation, 1 indicates that the receive end of the first MBS session is allowed to enter the RRC connected state). Alternatively, the first information may be a preset constant. For example, -1 indicates that the receive end of the first MBS session is allowed to enter the RRC connected state, and 1 indicates that the receive end of the first MBS session is not allowed to enter the RRC connected state. Alternatively, the first indication information may be an enumerated value, and a value of the first indication information may be {ALLOWED, NOT_ALLOWED}. If the first indication information is ALLOWED, it indicates that the receive end of the first MBS session is allowed to enter the RRC connected state. In an actual implementation, the first indication information may be another constant value. For specific forms of indication information (X^{th} indication information, (X+1)^{th} indication information, second indication information, third indication information, and fourth indication information) below, refer to the descriptions herein.

In addition, it should be further noted that the first indication information indicates that the receive end of the first MBS session is allowed to enter the RRC connected state. After receiving the first indication information, the receive end of the first MBS session may enter the RRC connected state or does not enter the RRC connected state based on a current service requirement of the first MBS session.

Information 3: X^{th} indication information, where the X^{th} indication information indicates the receive end of the first MBS session to enter the RRC connected state.

It should be noted that the X^{th} indication information directly indicates the receive end of the first MBS session to enter the RRC connected state. After receiving the first indication information, the receive end of the first MBS session directly enters the RRC connected state.

The first information may include only the information 1, the information 2, or the information 3, and may alternatively include the information 1 and the information 2, or the information 1 and the information 3. This is not specifically limited herein in this application.

In addition, in another possible implementation, when the first information does not include the (X+1)^{th} indication information, the receive end of the first MBS session may also be triggered to enter the RRC connected state, where the (X+1)^{th} indication information indicates that the receive end of the first MBS session is prohibited (or not allowed) from entering the RRC connected state.

When the UE 1 receives the first information, the UE 1 may directly send a message 21 to the RAN based on the first information, to enter the RRC connected state. Alternatively, the UE 1 may perform further determining, and enter the RRC connected state after determining that the UE 1 meets a condition for entering the RRC connected state. For example, after receiving the first information, the UE 1 sends the message 21 to the RAN based on one or more pieces of information such as a local policy and a remaining power, to enter the RRC connected state. Alternatively, after receiving the first information, the UE 1 further determines whether another MBS session in which the UE 1 joins allows the UE 1 to enter the RRC connected state. This is not limited in this application. The message 21 may be an RRC connection resume request (RRC connection resume request) message or an RRC setup request (RRC setup request) message. The message 21 may be used to trigger the UE to enter the RRC connected state. Optionally, the message 21 may include the identification information of the first MBS session.

In addition, after receiving the message 21 of the UE 1, the RAN sends a response message to the UE 1, where the response message is an RRC connection resume (RRC connection resume) message. The UE 1 may alternatively enter the RRC connected state after receiving the response message. Alternatively, the response message is an RRC setup (RRC setup) message. After receiving the response message, the UE 1 sends an RRC setup complete (RRC setup complete) message to the RAN, and the UE 1 may enter the RRC connected state after sending the RRC setup complete message.

Step 202B: The network device pages the receive end.

Step 203B: The UE 1 receives the paging, and enters the RRC connected state.

It should be noted that paging the receive end may be performed by the mobility management network element (for example, the AMF), or may be performed by the access network device (for example, the RAN). This is not specifically limited.

It should be noted that the network device may page the receive end by directly sending a paging message, or may page the receive end of the first MBS session by sending a paging message through a relay device. This is not specifically limited herein in this application. Specifically, paging may be performed in the following manner.

In an implementation, the network device queries, based on context information that is of the terminal and that is stored in the network device, whether the context information of the terminal includes information about the first MBS session (in other words, if the context information of the terminal includes the information about the first MBS session, it indicates that the terminal already joins in the first MBS session). If the context information of the terminal includes the information about the first MBS session, the network device sends the paging message to the terminal whose context information includes the information about the first MBS session. After receiving the paging message, the terminal whose context information includes the information about the first MBS session enters the RRC connected state.

In another possible implementation, the network device locally stores (or maintains) context information of the first MBS session, where the context information of the first MBS session includes list information of terminals that join in the first MBS session. The network device searches the list information, to obtain list information of the receive end of the first MBS session.

In addition, optionally, when the context information of the terminal includes the information about the first MBS session, the network device may further obtain information such as a priority (Priority) of the terminal and a connection management state (connection management state, CM-State) of the terminal. If the priority of the terminal meets a condition (for example, the priority of the terminal is higher than a preset value configured by a system, or the priority of the terminal is higher than that of another terminal (the another terminal herein refers to another terminal whose context information includes the information about the first MBS session)) or the terminal is in the RRC inactive state or the idle state, the network device sends the paging message to the terminal whose context information includes the information about the first MBS session. After receiving the paging message, the terminal whose context information includes the information about the first MBS session enters the RRC connected state.

Further, optionally, the network device may further add the terminal whose context information includes the information about the first MBS session to "list information of receive ends that currently receive the service data of the first MBS session", and page a terminal in the list, or perform group paging based on a tracking area (tracking area) of the terminal in the list.

Optionally, the paging message includes the TMGI (namely, the identifier of the first MBS session) corresponding to the first MBS session. For example, a paging message 1 includes the identifier of the first MBS session. The network device may directly page all receive ends of the first MBS session. The TMGI is carried, so that the network device more quickly finds the receive end of the first MBS session, to trigger the receive end of the first MBS session to enter the RRC connected state.

Specifically, the paging message may further include an identifier of the receive end corresponding to the first MBS session. For example, a paging message 1 includes identifiers of receive ends such as a UE 1 and a UE 2 of the first MBS session. The network device may directly page the UE 1 and the UE 2.

It should be noted that if the UE 1 is currently in the RRC connected state, the UE 1 may not be paged in step 202B, and the UE 1 only needs to keep in the RRC connected state and receive the service data of the first MBS session.

Further, when the UE 1 is currently in the RRC inactive state, after receiving the first information or the paging, the UE 1 may directly enter the RRC connected state after sending an RRC connection resume message to the RAN.

Alternatively, when the UE 1 is currently in the idle state, after receiving the first information or the paging, the UE 1 may directly enter the RRC connected state after sending a service request (service request) message to the AMF.

In addition, in actual application, in a possible implementation method, this application may further include a terminal of another MBS session (not the first MBS session), a terminal that does not access a network, or a terminal that does not join in any MBS session. Because the first information broadcast by the network device is specific to the receive end of the first MBS session, these terminals do not change current operation behaviors even if receiving the first information. For example, the embodiment in FIG. 2 further relates to a UE 2. The UE 2 is a receive end of a second MBS session of the network device, and the UE 2 is in an RRC inactive state and performs a service of the second MBS session. After receiving the first information, the UE 2 finds that the first information is specific to the receive end of the first MBS session, and continues to remain in the RRC inactive state and perform the service of the second MBS session.

In this application, the receive end of the first MBS session enters the RRC connected state only after receiving the broadcast information or the paging from the network device, but does not adjust to the RRC connected state independently. In this manner, the network device can flexibly manage and control the multicast/broadcast service. In addition, the network device triggers the receive end of the first MBS session to enter the RRC connected state. Compared with a manner in which the receive end of the first MBS session independently enters the RRC connected state, this has higher data processing efficiency.

In step 201, the RAN may determine, in the following manner, to trigger the receive end of the first MBS session to enter the RRC connected state:

When a first preset condition is met, the RAN determines to trigger the receive end of the first MBS session to enter the RRC connected state. Alternatively, when a first preset condition is met and there is at least one terminal that is in an idle state or an RRC inactive state in the receive end, the RAN determines to trigger the receive end of the first MBS session to enter the RRC connected state.

It should be noted that when the first preset condition is met, the network device may directly determine, without performing another determining, to trigger the receive end of the first MBS session to enter the RRC connected state. However, when the first preset condition is met, the receive end of the first MBS session may be already in the RRC connected state. The network device still broadcasts the first information, so that resources are wasted. Therefore, the network device may determine, when the first preset condition is met and there is at least one terminal that is in the idle state or the RRC inactive state in the receive end of the first MBS session, to trigger the receive end of the first MBS session to enter the RRC connected state. In this manner, the network device may send the first information as required, so that processing resources of the network device are saved. For example, when the receive end of the first MBS session receives other service data (not the service data of the first MBS session), and the receive end still needs to be in the RRC connected state, the network device may not broadcast the first information.

Optionally, the first preset condition may include one or more of the following conditions:
Condition 1: Load of the network device is lower than a preset threshold.

It should be noted that load (which may be understood as a data processing capability) of a network device is usually limited, and the network device cannot process a large quantity of services. For example, the network device does not support a large quantity of terminals exchanging service data of MBS sessions with the network device. However, if the load of the network device is lower than the preset threshold (For example, the preset threshold is that 100 receive ends of an MBS session are supported to perform a multicast/broadcast service. Currently, 10 receive ends of the MBS session perform the multicast/broadcast service under the network device. Because 10<100, it may be understood that the load of the network device is lower than the preset threshold. In addition, if there are 10 receive ends of the MBS session that perform the multicast/broadcast service and 90 terminals that perform another service (for example, a unicast service) under the current network device, because the preset threshold is set for the receive ends of the MBS session, the 90 terminals that perform the another service may not be considered. Therefore, it may still be understood that the load of the network device is lower than the preset threshold), that is, the network device does not have a large quantity of services to be processed, the network device may determine to trigger the receive end of the first MBS session to enter the RRC connected state. The preset threshold may be a preset or nominal (nominal) percentage of load of a network device, or a capacity (that is, a capability of processing incoming or outgoing data), or may be a preset quantity of terminals. This is not limited herein.

Condition 2: The receive end of the first MBS session triggers a cross-network device handover procedure.

For example, the receive end of the first MBS session needs to be handed over from a cell 1 to a cell 2. The cell 1 and the cell 2 are not served by a same serving base station. To ensure service reliability, the receive end of the first MBS session needs to be in the RRC connected state. Therefore, the network device may determine to trigger the receive end of the first MBS session to enter the RRC connected state. Specifically, the network device may determine, based on analytics information sent by a data analytics network element in a network, that the receive end of the first MBS session is handed over from the cell 1 to the cell 2.

Condition 3: A service requirement of the first MBS session changes.

It should be noted that a service requirement is usually related to a feature of a service. A change in the service requirement of the first MBS session may be understood as that service information of the first MBS session is adjusted. For example, the service data of the first MBS session includes data that is not allowed to be received in the idle state or the RRC inactive state. In this case, the receive end of the first MBS session needs to be in the RRC connected state. Therefore, the network device may determine to trigger the receive end of the first MBS session to enter the RRC connected state. In addition, the network device may determine the service requirement of the first MBS session based on the context information of the first MBS session. This is not limited herein in this application.

Condition 4: A priority of the first MBS session is higher than (or is not lower than) a preset value.

It should be noted that the priority of the first MBS session may be understood as a performance requirement, a quality requirement, or the like of the first MBS session. The priority of the first MBS session is higher than the preset value. Service reliability usually needs to be strictly ensured, and service reliability can be ensured only when the network device keeps the receive end of the first MBS session in the RRC connected state. Generally, the preset value is preconfigured through operation, administration, and maintenance (operation administration and maintenance, OAM). The OAM may set different preset values for MBS sessions created on different RANs. For example, a preset value set by the OAM for an MBS session created on the RAN 1 is a preset value 1, and a preset value set by the OAM for an MBS session created on the RAN 2 is a preset value 2. If MBS sessions of a same multicast/broadcast service are executed on the RAN 1 and the RAN 2, where the MBS session on the RAN 1 is an MBS session 1, and the MBS session on the RAN 2 is an MBS session 2, during priority comparison, a priority of the MBS session 1 on the RAN 1 is compared with the preset value 1. If the priority of the MBS session 1 is higher than (or not lower than) the preset value 1, it may be determined to trigger a receive end of the MBS session 1 (that is, the first MBS session) to enter the RRC connected state. A priority of the MBS session 2 on the RAN 2 is compared with the preset value 2. If the priority of the MBS session 2 is not higher than the preset value 2, it may be determined not to trigger a receive end of the MBS session 2 to enter the RRC connected state. It should be noted that, in an implementation, the preset value 1 and the preset value 2 may have a same value, or may have different values. This is not limited herein.

Condition 5: A reliability requirement of the first MBS session is higher than a first threshold.

Optionally, the reliability requirement of the first MBS session may be a reliability requirement of a 5QI that is of a QoS flow of the first MBS session and whose reliability requirement is the highest. For example, the first MBS session may include a plurality of QoS flows. 5QI values of different QoS flows may be different. The reliability requirement of the 5QI that is of the QoS flow and whose reliability requirement is the highest is selected as the reliability requirement of the first MBS session, so that reliable receiving of data of a QoS flow whose reliability requirement is higher can be ensured as much as possible. It is assumed that the first MBS session includes 3 QoS flows: a QoS flow 1, a QoS flow 2, and a QoS flow 3. A 5QI value of the QoS flow 1 is 1, and a packet error rate corresponding to a reliability requirement associated with 5QI=1 is 10⁻³. A 5QI value of the QoS flow 2 is 3, and a packet error rate corresponding to a reliability requirement associated with 5QI=3 is 10⁻⁶. A 5QI value of the QoS flow 3 is 5, and a packet error rate corresponding to a reliability requirement associated with 5QI=5 is 10⁻⁹. Because the reliability requirement associated with the 5QI of the QoS flow 3 is the highest, the reliability requirement 10⁻⁹ associated with 5QI=5 may be used as the reliability requirement of the first MBS session.

Optionally, the reliability requirement of the first MBS session is determined based on reliability requirements associated with the 5QIs of the QoS flows of the first MBS session. For example, weighted calculation may be performed on reliability requirements associated with 5QIs of all QoS flows of the first MBS session, to determine the reliability requirement of the first MBS session. For example, a value ((10⁻³+10⁻⁶+10⁻⁹)/3) determined by averaging a sum of the packet error rates corresponding to the reliability requirements associated with the 5QIs of the QoS flow 1 to the QoS flow 3 is used as the reliability requirement of the first MBS session. For another example, the reliability requirement of the first MBS session is determined by multiplying, based on features of different QoS flows, the packet error rates corresponding to the reliability requirements associated with 5QIs of the QoS flows by different weight values. This is not specifically limited herein in this application.

In addition, the first threshold may be preconfigured by the OAM. Alternatively, the first threshold may be determined by sorting reliability requirements of MBS sessions on the RAN in a descending order. It is assumed that the RAN allows only receive ends of first X MBS sessions to enter the RRC connected state. In this case, a value of the first threshold may be a reliability requirement of an (X+1)^{th} MBS session. In addition, considering a resource status of the RAN, if the RAN can support receive ends of YMBS sessions to enter the RRC connected state, a reliability requirement of a (Y+1)^{th} MBS session may be used as the first threshold. However, in actual application, only receive ends of first X (X<Y) MBS sessions may be triggered to enter the RRC connected state. If the reliability requirement of the first MBS session is higher than the first threshold, the RAN determines that the receive end of the first MBS session enters the RRC connected state.

Condition 6: A delay of the first MBS session is lower than a second threshold.

Optionally, the delay of the first MBS session may be a delay of a 5QI that is of a QoS flows of the first MBS session and whose delay is the lowest. For example, the first MBS session may include a plurality of QoS flows. 5QI values of different QoS flows may be different. The delay of the 5QI that is of the QoS flow and whose delay is the lowest is selected as the delay of the first MBS session, so that reliable receiving of data of a QoS flow with a low delay can be ensured as much as possible. It is assumed that the first MBS session includes 2 QoS flows, and identifiers of the QoS flows are separately a QoS flow 1 and a QoS flow 2. For a delay, a 5QI value of the QoS flow 1 is 4, and a delay associated with 5QI=4 is 15 ms. A 5QI value of the QoS flow 2 is 3, and a delay associated with 5QI=3 is 10 ms. Because the delay associated with the QoS flow 2 is the lowest, the delay associated with 5QI=3 may be used as the delay of the first MBS session.

Optionally, the delay of the first MBS session is determined based on delays associated with the 5QIs of the QoS flows of the first MBS session. For example, weighted calculation may be performed on delays associated with 5QIs of all QoS flows of the first MBS session, to determine the delay of the first MBS session. For example, a value ((15+10)/2) determined by averaging a sum of the delays associated with the 5QIs of the QoS flow 1 and the QoS flow 2 is used as the delay of the first MBS session. For another example, the delay of the first MBS session is determined by multiplying, based on features of different QoS flows, the delays associated with 5QIs of the QoS flows by different weight values. This is not specifically limited herein in this application.

In addition, the second threshold may be preconfigured by the OAM. Alternatively, the second threshold may be determined by sorting delays of MBS sessions on the RAN in an ascending order. It is assumed that the RAN allows only receive ends of first X MBS sessions to enter the RRC connected state. In this case, a value of the second threshold may be a delay of an (X+1)^{th} MBS session. In addition, considering a resource status of the RAN, if the RAN can support receive ends of Y MBS sessions to enter the RRC connected state, a delay of a (Y+1)^{th} MBS session may be used as the second threshold. However, in actual application, only receive ends of first X (X<Y) MBS sessions may be triggered to enter the RRC connected state. If the delay of the first MBS session is lower than the second threshold, the RAN determines that the receive end of the first MBS session enters the RRC connected state.

Condition 7: An ARP of the first MBS session is lower than a third threshold.

Optionally, the ARP of the first MBS session may be an ARP of a QoS flow that is of the first MBS session and whose ARP is the lowest. For example, the first MBS session may include a plurality of QoS flows. ARP values of different QoS flows may be different. The ARP of the QoS flow and whose ARP is the lowest is selected as the ARP of the first MBS session, so that reliable receiving of data of a QoS flow with a low ARP can be ensured as much as possible. It is assumed that the first MBS session includes 2 QoS flows, and identifiers of the QoS flows are separately a QoS flow 1 and a QoS flow 2. For the ARP, an ARP value of the QoS flow 1 is 4, and an ARP value of the QoS flow 2 is 3. Because the ARP of the QoS flow 1 is the lowest, ARP=4 may be used as the ARP of the first MBS session.

Optionally, the ARP of the first MBS session is determined based on ARPs of the QoS flows of the first MBS session. For example, weighted calculation may be performed on ARPs of all QoS flows of the first MBS session, to determine the ARP of the first MBS session. For example, a value ((4+3)/2) determined by averaging a sum of the ARPs of the QoS flow 1 and the QoS flow 2 is used as the ARP of the first MBS session. For another example, the ARP of the first MBS session is determined by multiplying, based on features of different QoS flows, the ARPs of the QoS flows by different weight values. This is not specifically limited herein in this application.

In addition, the third threshold may be preconfigured by the OAM. Alternatively, the third threshold may be determined by sorting ARPs of MBS sessions on the RAN in an ascending order. It is assumed that the RAN allows only receive ends of first X MBS sessions to enter the RRC connected state. In this case, a value of the third threshold may be an ARP of an (X+1)^{th} MBS session. In addition, considering a resource status of the RAN, if the RAN can support receive ends of first Y MBS sessions to enter the RRC connected state, an ARP of a (Y+1)^{th} MBS session may be used as the third threshold. However, in actual application, only receive ends of first X (X<Y) MBS sessions may be triggered to enter the RRC connected state. If the ARP of the first MBS session is lower than the third threshold, the RAN determines that the receive end of the first MBS session enters the RRC connected state.

Condition 8: The network device has a resource required by the first MBS session.

The resource of the first MBS session may be a storage resource, a buffer resource, a scheduling resource, a processor resource, an air interface resource (for example, a time-frequency resource), an allocated tunnel identifier resource (for example, a tunnel endpoint ID, TEID, tunnel endpoint identifier), an IP address resource, a resource of a unicast PDU session associated with the first MBS session (for example, the terminal that receives the first MBS session allocates the resource of the unicast PDU session associated with the first MBS session, including a storage resource, a buffer resource, a scheduling resource, a processor resource, an air interface resource (for example, a time-frequency resource), and an allocated tunnel identifier resource that are required by the terminal), or the like that is used for data transmission of the first MBS session.

The network device has a resource (for example, an air interface resource) of the first MBS session. In other words, the network device allows the receive end of the first MBS session to be in the RRC connected state. When the network device has the resource of the first MBS session, reliability of an MBS session is ensured, and the receive end of the first MBS session is triggered to enter the RRC connected state.

It should be noted that, in an aspect, that the network device has the resource of the first MBS session may be understood as that the network device determines that the network device has the resource of the first MBS session, for example, load is lower than a preset threshold, or a capacity may allow processing of the first MBS session. In another aspect, that the network device has the resource of the first MBS session may be understood as that the OAM requests (requests) the network device that the network device has the resource for processing a service (for example, the first MBS session). In still another aspect, that the network device has the resource of the first MBS session may be understood as that another network device associated with (or connected to) the network device mentioned in this application may continue to process a service of the first MBS session that is processed by the network device in this application. For example, the access network device receives an overload stop (overload stop) message from the AMF network element. When the access network device does not complete processing of the service of the first MBS session, the access network device may send a message to the AMF, and continue to process the service of the first MBS session through the AMF. In actual application, the first preset condition may be a combination of the condition 1 to the condition 8, for example, a combination of the condition 1 and the condition 2. To be specific, the first preset condition may be that load of the network device is lower than a preset threshold, and a service requirement of the first MBS session changes. Alternatively, the first preset condition may be another combination of conditions. This is not illustrated one by one herein.

With reference to the first preset condition, the network device may know when to broadcast the first information or when to page the receive end of the first MBS session, so as to trigger the receive end of the first MBS session to enter the RRC connected state.

In actual application, the receive end of the first MBS session is not always in the RRC connected state after receiving the first information. The network device further needs to determine when to trigger the receive end of the first MBS session to enter the idle state or the RRC inactive state. The network device sends second information when determining that a second preset condition is met, where the second information may be used to trigger the receive end of the first MBS session to enter the idle state or the RRC inactive state. If the UE 1 in the RRC connected state receives the second information, the UE 1 enters the idle state or the RRC inactive state based on the second information. Specifically, the second preset condition is as follows:
Condition 1: The load of the network device is higher than the preset threshold.

Specifically, for understanding, refer to the condition 1 in the first preset condition. Details are not described herein again.

Condition 2: The service requirement of the first MBS session changes.

For example, if the service data of the first MBS session includes data that is not allowed to be received in the RRC connected state, the receive end of the first MBS session needs to be in the idle state or the RRC inactive state. Therefore, the network device may determine to trigger the receive end of the first MBS session to enter the idle state or the RRC inactive state. In addition, the network device may determine the service requirement of the first MBS session based on the context information of the first MBS session. This is not limited herein in this application.

Condition 3: The priority of the first MBS session is lower than (or not higher than) the preset value.

For example, the preset value set by the OAM for an MBS session created on the RAN 1 is a preset value 1, and the preset value set by the OAM for an MBS session created on the RAN 2 is a preset value 2. If MBS sessions of a same multicast/broadcast service are executed on the RAN 1 and the RAN 2, where the MBS session on the RAN 1 is an MBS session 1, and the MBS session on the RAN 2 is an MBS session 2, during priority comparison, a priority of the MBS session 1 on the RAN 1 is compared with the preset value 1. If the priority of the MBS session 1 is lower than (or not higher than) the preset value 1, it may be determined to trigger a receive end of the MBS session 1 (that is, the first MBS session) to enter the idle state or the RRC inactive state. A priority of the MBS session 2 on the RAN 2 is compared with the preset value 2. If the priority of the MBS session 2 is lower than (or not higher than) the preset value 2, it may be determined to trigger a receive end of the MBS session 2 to enter the idle state or the RRC inactive state. It should be noted that, in an implementation, the preset value 1 and the preset value 2 may have a same value, or may have different values. This is not limited herein.

Condition 4: The reliability requirement of the first MBS session is lower than (or not higher than) the first threshold.

Specifically, for understanding, refer to the condition 5 in the first preset condition. Details are not described herein again.

Condition 5: The delay of the first MBS session is higher than the second threshold.

Specifically, for understanding, refer to the condition 6 in the first preset condition. Details are not described herein again.

Condition 6: The ARP of the first MBS session is higher than the third threshold.

Specifically, for understanding, refer to the condition 7 in the first preset condition. Details are not described herein again.

Condition 7: The network device does not have a resource required by the first MBS session.

It should be noted that, in an implementation solution, the UE 1 receives, through the network device, the service data corresponding to the first MBS session, and may also receive, through the network device, service data or unicast service data corresponding to an X^{th} MBS session (that is, an MBS session other than the first MBS session). If the X^{th} MBS session meets the condition 3 to the condition 8 of the first preset condition, or the unicast session is in an active state, or the network device has context information of the unicast session, or the unicast session meets the condition 3 to the condition 8 of the first preset condition, the network device may not trigger the UE 1 to enter the RRC idle state or the RRC inactive state.

In actual application, the second preset condition may be a combination of the condition 1 to the condition 7, for example, a combination of the condition 1 and the condition 2. To be specific, the second preset condition may be that load of the network device is higher than a preset threshold, and a service requirement of the first MBS session changes. Alternatively, the second preset condition may be another combination of conditions. This is not illustrated one by one herein.

With reference to the second preset condition, the network device may know when to broadcast the second information, so as to trigger the receive end of the first MBS session to enter the idle state or the RRC inactive state.

Alternatively, the second information may be included in an SIB message, or the second information may be included in a message (for example, an RRC connection release message) sent to each UE. This is not limited in this application. Optionally, the second information may specifically include one or more of the following information:
Information 1: the identification information of the first MBS session.

The identification information of the first MBS session may be a TMGI corresponding to the first MBS session. After receiving the identification information of the first MBS session, the UE 1 in the RRC connected state may directly enter the idle state or the RRC inactive state.

Information 2: second indication information, where the second indication information indicates that the receive end of the first MBS session is allowed to enter the idle state or the RRC inactive state.

It should be noted that the second indication information indicates that the receive end of the first MBS session is allowed to enter the idle state or the RRC inactive state. After receiving the second indication message, the receive end of the first MBS session may enter the idle state or the RRC inactive state (or does not enter the idle state or the RRC inactive state) based on a current service requirement of the first MBS session.

Specifically, after receiving the second information, the UE 1 may receive the service data of the first MBS session in the idle state or the RRC inactive state.

When the second information is included in the RRC connection release message, optionally, the RRC connection release message may include configuration information used by the UE 1 to receive the service data of the first MBS session in the idle state or the RRC inactive state, for example, one or more of the following configuration information:
a group radio network temporary identifier (group radio network temporary identifier, G-RNTI) for multicast reception, bandwidth part (bandwidth part, BWP) information corresponding to the service data of the first MBS session, a discontinuous reception (discontinuous reception, DRX) parameter of a physical downlink shared channel (physical downlink shared channel, PDSCH) scrambling sequence G-RNTI of the service data of the first MBS session, a demodulation reference signal configuration, rate matching reference signal information, and a back-off timer (For example, before the back-off timer expires, the UE 1 does not send an RRC connection establishment request message, and after the back-off timer expires, the UE 1 is triggered to send an RRC connection establishment request message).

Further, optionally, if the network device obtains RRC inactive assistance information (RRC inactive assistance information), the network device may trigger the receive end to enter the RRC inactive state. The RRC inactive assistance information may include a tracking area of the receive end of the first MBS session, a DRX parameter, a periodic registration update timer (periodic registration update timer), and the like. The network device may set, based on the RRC inactive assistance information, a parameter used to trigger the receive end of the first MBS session to enter the RRC inactive state, for example, a RAN notification area (RAN notification area, RNA) or a RAN notification update timer (RAN notification update timer).

In addition, if the network device does not obtain the RRC inactive assistance information, the network device may trigger the receive end of the first MBS session to enter the RRC idle state.

It should be noted that some multicast/broadcast services may not require particularly high reliability during transmission. In this case, the receive end of the first MBS session may not need to be in the RRC connected state to receive the service data of the first MBS session. Based on this, the network device may allow the receive end of the first MBS session to receive the service data of the first MBS session in the idle state or the RRC inactive state.

In a possible implementation, the network device broadcasts third information based on the second preset condition, where the third information may be used to notify the receive end of the first MBS session that the receive end of the first MBS session is prohibited from entering the RRC connected state, or that the receive end of the first MBS session is allowed to receive the service data of the first MBS session in the idle state or the RRC inactive state. The UE 1 in the idle state or the RRC inactive state receives the third information, and does not enter the RRC connected state based on the third information; or receives the service data of the first MBS session in the idle state or the RRC inactive state.

The third information may alternatively be included in an SIB message. This is not limited in this application. The third information may specifically include one or more of the following information:
Information 1: the identification information of the first MBS session.

The identification information of the first MBS session may be a TMGI corresponding to the first MBS session. After receiving the identification information of the first MBS session, the UE 1 in the idle state or the RRC inactive state may directly receive the service data of the first MBS session, or may not enter the RRC connected state.

Information 2: third indication information. The third indication information indicates that the receive end of the first MBS session is prohibited from entering the RRC connected state, or that the receive end is allowed to receive the service data of the first MBS session in the idle state or the RRC inactive state.

It should be noted that the third indication information indicates that the receive end of the first MBS session is prohibited from entering the RRC connected state, or that the receive end is allowed to receive the service data of the first MBS session in the idle state or the RRC inactive state. After receiving the third indication information, the receive end of the first MBS session may receive the service data of the first MBS session (or may not receive the service data of the first MBS session) based on a current service requirement of the first MBS session. After receiving the third indication information, the receive end of the first MBS session may further do not enter the RRC connected state based on the current service requirement of the first MBS session.

This application further relates to another terminal (for example, a UE 2). The another terminal is not a receive end of the first MBS session, and the another terminal may not join in any MBS session or the first MBS session, or may not access a network. If the another terminal receives fourth information before joining in any MBS session or the first MBS session, the another terminal does not send request information for joining in any MBS session or the first MBS session.

In a possible implementation, the network device broadcasts the fourth information based on the second preset condition, where the fourth information may be used to notify that a terminal that does not access a network is prohibited from joining in any MBS session or the first MBS session, or a terminal that does not join in any MBS session is prohibited from joining in any MBS session or the first MBS session, or a terminal that does not join in the first MBS session is prohibited from joining in the first MBS session. The UE 2 does not send, based on the fourth information, the request for joining in any MBS session or the first MBS session.

The fourth information includes join prohibition indication information. The join prohibition indication information indicates that joining in any MBS session is prohibited. It should be noted that the fourth information includes the join prohibition indication information, and the network device does not allow the UE 2 to join in any MBS session.

The fourth information may include the identifier of the first MBS session. It should be noted that the fourth information includes the identifier of the first MBS session, and the network device does not allow the UE 2 to join in the first MBS session.

In actual application, a row (for example, a last row of Table 1) may be added to Table 1 (where the table may be UAC-BarringInfoSetList (unified access control-barring (access) information setting table)) as the join prohibition indication information, or a row (for example, a last row of Table 2) indicating that joining in the MBS session is prohibited may be added to Table 2 (where the table may be a UAC-BarringPerCatList (unified access control-barring per category List) table). It should be noted that a description of information about an added row in the following table is merely used as an example. In actual application, a description of specific information is not limited. In addition, the network device and the terminal may pre-agree on content in the following Table 1 and Table 2. When broadcasting the fourth information, the network device may carry only an access category number "xx" in the following Table 1. After receiving the fourth information, the terminal parses the access category number "xx" in the fourth information, and then may determine not to send a request for joining in any MBS session. When broadcasting the fourth information, the network device may further carry an access identifier number "xx" in the following Table 2. After receiving the fourth information, the terminal parses the access identifier number "xx" in the fourth information, and may determine not to send a request for joining in an MBS session. In actual application, one or more rows in the following table may be involved. This is not specifically limited in this application.

**Table 1**

| Access category number | UE-related conditions | Access attempt type |
|---|---|---|
| 0 | All | Mobile originated (mobile originated, MO) signaling caused by paging |
| 1 | A UE is configured with a delay-tolerant service and is subject to access control of an access category 1, where the access category 1 is determined based on a relationship between a home public land mobile network (home public land mobile network, HPLMN) of the UE and a selected public land mobile network (public land mobile network, PLMN) | All data except emergency events or MO exception data |
| 2 | All | Emergency events |
| 3 | All conditions except those in the access category 1 | MO signaling at a non-access stratum (non-access stratum, NAS) level except paging |
| 4 | All conditions except those in the access category 1 | Multimedia telephony (multimedia telephony, MMTEL) voice |
| 5 | All conditions except those in the access category 1 | MMTEL video |
| 6 | All conditions except those in the access category 1 | Messages |
| 7 | All conditions except those in the access category 1 | MO data that does not belong to any other access category |
| 8 | All conditions except those in the access category 1 | RRC-level MO signaling caused by non-paging |
| 9 | All conditions except those in the access category 1 | MO IMS registration-related signaling |
| 10 | All | Abnormal MO data |
| 11-31 | ... | Retained standardized access categories |
| 32-63 | All | Operator-based classification |
| **XX** | **All conditions except those in the access category 1** | **MO signaling for receiving multicast data** |

**Table 2**

| Access identifier | Terminal configuration information |
|---|---|
| 0 | A UE is not configured with any parameter in Table 2 |
| 1 | A UE is configured with a multimedia priority service (multimedia priority service, multimedia priority service, MPS) |
| 2 | A UE is configured with a mission critical service (mission critical service, MCS) |
| 3 | A UE applicable to a disaster condition |
| 4-10 | Reserved for future use |
| 11 | A UE is configured with an access category 11 |
| 12 | A UE is configured with an access category 12 |
| 13 | A UE is configured with an access category 13 |
| 14 | A UE is configured with an access category 14 |
| 15 | A UE is configured with an access category 15 |
| **XX** | **Temporary mobile group identity** |

In addition, because all the first information to the fourth information is broadcast information and can be received by a plurality of UEs, to save processing resources and reduce signaling interaction, the broadcast information may further include an identifier of another MBS session. For example, the first information includes an identifier of an MBS session 1 (the first MBS session) and an identifier of an MBS session 2. In this case, both a receive end of the MBS session 1 and a receive end of the MBS session 2 may enter the RRC connected state after receiving the first information. This is not specifically limited herein in this application.

In this application, the network device flexibly manages the state of the receive end of the first MBS session by sending the broadcast message (the first information, the second information, the third information, or the fourth information), so that resource overheads required by the network device to keep the receive end of the first MBS session in a state for a long time is reduced. Further, the state of the receive end of the first MBS session is managed and controlled based on the broadcast information, so that the receive end of the first MBS session can make a response in time, and data processing efficiency is improved.

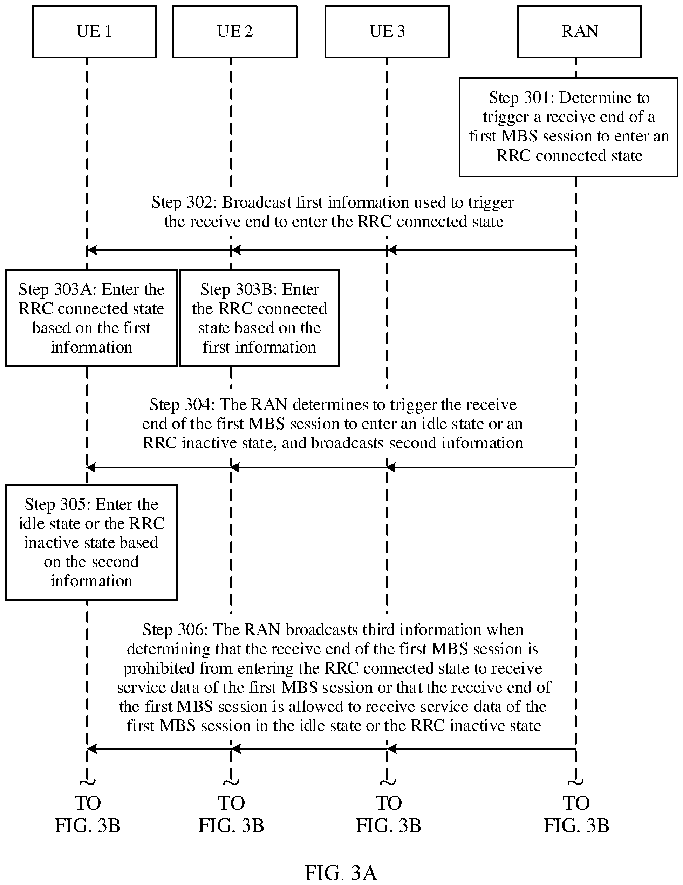

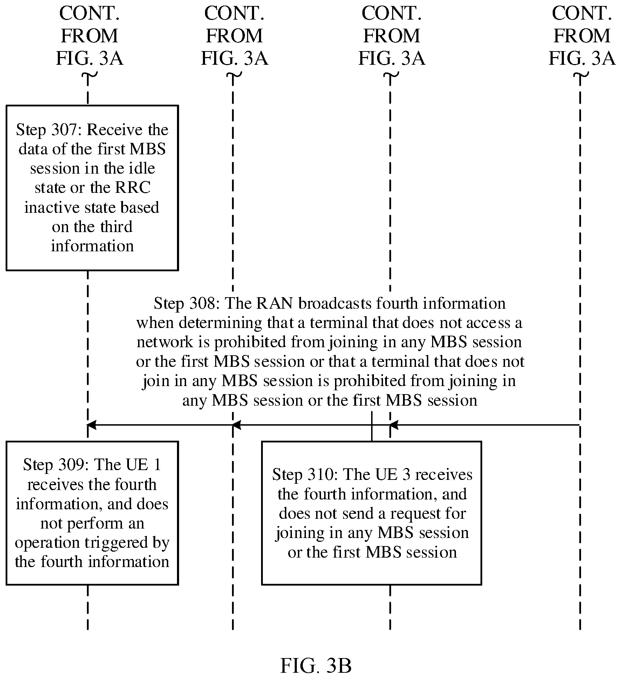

As shown in FIG. 3A and FIG. 3B, FIG. 3A and FIG. 3B show another communication method. In FIG. 3A and FIG. 3B, an example in which an access network device is a RAN, receive ends of a first MBS session are a UE 1 and a UE 2, and a terminal that does not access a network is a UE 3 is used for description. Details are as follows:

Step 301: The RAN determines to trigger the receive end of the first MBS session to enter an RRC connected state.

Step 302: The RAN broadcasts first information used to trigger the receive end of the first MBS session to enter the RRC connected state.

Correspondingly, the UE 1 to the UE 3 receive the first information.

Step 303A: The UE 1 enters the RRC connected state based on the first information.

Step 303B: The UE 2 enters the RRC connected state based on the first information.

The UE 2 and UE 1 both perform same operations. This is not illustrated one by one herein. The operations performed by the UE 2 may be understood with reference to the operations performed by the UE 1.

For steps 301 to 303B, refer to related descriptions in the embodiment shown in FIG. 2. Details are not described again.

It is assumed that when determining that a second preset condition is met, the RAN triggers the receive end of the first MBS session to enter an idle state or an RRC inactive state, and step 304 may be performed.

Step 304: The RAN determines to trigger the receive end of the first MBS session to enter the idle state or the RRC inactive state, and broadcasts second information.

The second information is used to trigger the receive end of the first MBS session to enter the idle state or the RRC inactive state.

Correspondingly, the UE 1 to the UE 3 receive the second information. Refer to the foregoing descriptions of the second information. Details are not described herein again.

Step 305: The UE 1 enters the idle state or the RRC inactive state based on the second information.

The RAN may perform step 306 when determining that particularly high reliability is not required for transmitting service data of the first MBS session.

Step 306: The RAN broadcasts third information when determining that the receive end of the first MBS session is prohibited from entering the RRC connected state to receive the service data of the first MBS session or that the receive end of the first MBS session is allowed to receive the service data of the first MBS session in the idle state or the RRC inactive state.

The third information is used to prohibit the receive end of the first MBS session from entering the RRC connected state to receive the service data of the first MBS session, or allow the receive end of the first MBS session to receive the service data of the first MBS session in the idle state or the RRC inactive state.

Correspondingly, the UE 1 to the UE 3 receive the third information. Refer to the foregoing descriptions of the third information. Details are not described herein again.

It should be noted that step 304 and step 306 may be combined. For example, steps 304 and 306 may be replaced with: The RAN broadcasts information A, where the information A may be used to trigger the receive end of the first MBS session to enter the idle state or the RRC inactive state, may be used to allow the receive end of the first MBS session to receive the service data of the first MBS session in the idle state or the RRC inactive state, and may be used to prohibit the receive end of the first MBS session from entering the RRC connected state to receive the service data of the first MBS session. Specifically, the information A may include the second information and the third information. This is not limited.

Step 307: The UE 1 receives the service data of the first MBS session in the idle state or the RRC inactive state based on the third information.

Optionally, to manage and control more terminals by the RAN, for example, a terminal that does not access a network or a terminal that does not join in any MBS session, the method further includes steps 308 to 310.

Step 308: The RAN broadcasts fourth information when determining that a terminal that does not access the network is prohibited from joining in any MBS session or the first MBS session or that a terminal that does not join in any MBS session is prohibited from joining in any MBS session or the first MBS session.

It should be noted that step 308 is an optional step in the embodiment shown in FIG. 3A and FIG. 3B. In FIG. 3A and FIG. 3B, a dashed line is used for illustration, so that RAN resources can be further saved and load can be reduced. Step 308 to step 310 may be used as an independent solution to resolve a problem that load of a RAN increases and system performance deteriorates because the terminal device still requests to join in the MBS session when RAN resources are insufficient.

Step 309: The UE 1 receives the fourth information, and does not perform an operation triggered by the fourth information.

Specifically, because the UE 1 already joins in the first MBS session, after the UE 1 receives the fourth information, the UE 1 may not perform any operation on the fourth information.

Step 310: The UE 3 receives the fourth information, and does not send a request for joining in any MBS session or the first MBS session.

Specifically, when the UE 3 has a requirement for receiving the service data of the first MBS session, if the UE 3 does not receive the fourth information, the UE 3 sends the request for joining in any MBS session or the first MBS session. Alternatively, in a case in which the UE 3 receives the fourth information, the UE 3 does not send the request for joining in any MBS session or the first MBS session.

It should be noted that when step 308 is included, step 304, step 306, and step 308 may be combined. For example, steps 304, 306, and 308 may be replaced with: The RAN broadcasts information B, where the information B may be used to trigger the receive end of the first MBS session to enter the idle state or the RRC inactive state, may be used to allow the receive end of the first MBS session to receive the service data of the first MBS session in the idle state or the RRC inactive state, may be used to prohibit the receive end of the first MBS session from entering the RRC connected state to receive the service data of the first MBS session, and may be used to prohibit a terminal that does not access a network from joining in any MBS session or the first MBS session. Specifically, the information B may include the second information, the third information, and the fourth information. This is not limited.

In the example in FIG. 3A and FIG. 3B, the RAN may first broadcast the first information, and then broadcast the second information, the third information, and the fourth information. However, in actual application, which information is broadcast first may be specifically determined based on a service requirement of the RAN or the first MBS session. A sequence of broadcasting the information is not limited herein, and which information is specifically broadcast is not limited.

In this application, the network device flexibly manages the state of the receive end of the first MBS session by sending the broadcast information (the first information, the second information, the third information, or the fourth information), so that resource overheads required by the network device to keep the receive end of the first MBS session in a state for a long time is reduced. Further, the state of the receive end of the first MBS session is managed and controlled based on the broadcast information, so that the receive end of the first MBS session can make a response in time, and data processing efficiency is improved.

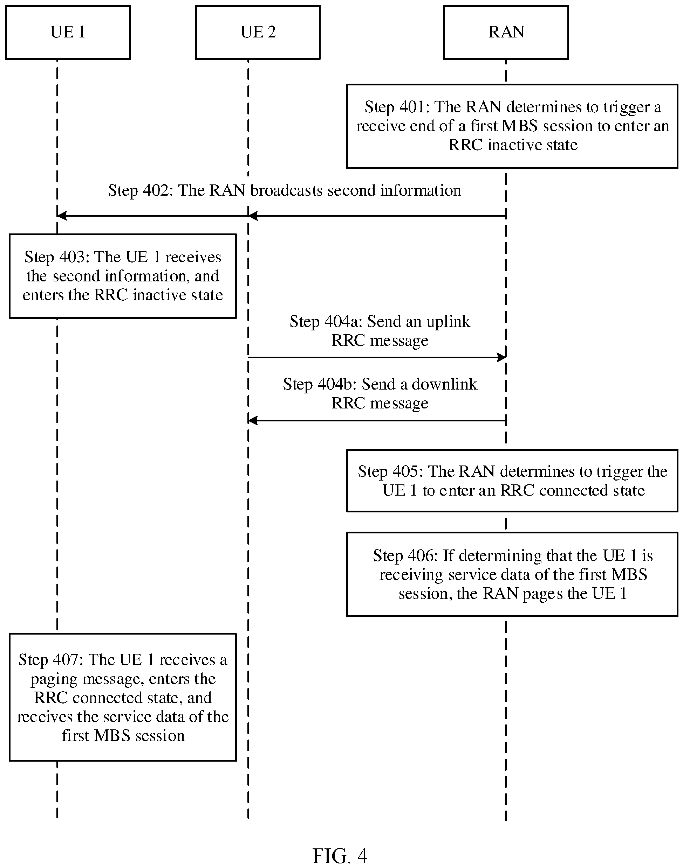

FIG. 4 shows another communication method. Network elements in FIG. 4 are a UE 1, a UE 2, and a RAN. Certainly, in actual application, another network element may be further involved. This is not specifically limited herein in this application. The UE 1 is a receive end of a first MBS session. In actual application, another receive end of the first MBS session may be further involved. Herein, only the UE 1 is used as an example for description. For another receive end of the first MBS session, refer to steps of the UE 1. The UE 2 is a terminal that does not join in a network or does not join in any MBS session. Details are as follows:

Step 401: The RAN determines to trigger the receive end of the first MBS session to enter an RRC inactive state.

For details, refer to the foregoing descriptions of determining to enter the RRC inactive state.

Step 402: The RAN sends second information, where the second information is used to trigger the receive end of the first MBS session to enter the RRC inactive state.

Specifically, refer to the foregoing descriptions. The RAN broadcasts the second information, or adds the second information to an RRC connection release message. This is not specifically limited in this application. Refer to the foregoing descriptions.

Specifically, after receiving the RRC connection release message, the UE 1 may receive service data of the first MBS session in the RRC inactive state.

Optionally, the RRC connection release message includes configuration information used by the UE 1 to receive the service data of the first MBS session in the idle state or the RRC inactive state. Refer to the foregoing descriptions. Details are not described herein again.

Step 403: The UE 1 receives the second information, and enters the RRC inactive state.

Step 404a: The UE 2 sends an uplink RRC message to the RAN.

Specifically, the uplink RRC message includes a TMGI corresponding to the first MBS session. In actual application, the TMGI may alternatively correspond to another MBS session. Herein, only the first MBS session is used as an example, and this is not specifically limited.

Step 404b: The RAN sends a downlink RRC message.

Specifically, the downlink RRC message may include fourth information, where the fourth information is used to notify that a terminal that does not access a network is prohibited from joining in any MBS session or the first MBS session, or a terminal that does not join in any MBS session is prohibited from joining in any MBS session or the first MBS session. In addition, the downlink RRC message further includes a timer, to prevent the UE 2 from continuously sending an uplink RRC message, resulting in increasing data processing load of the RAN.

If the RAN determines that a first preset condition is met, step 405 may be performed.

Step 405: The RAN determines to trigger the receive end of the first MBS session to enter an RRC connected state.

Step 406: If determining that the UE 1 is receiving the service data of the first MBS session, the RAN pages the UE 1.

Step 407: The UE 1 receives the paging message, enters the RRC connected state, and receives the service data of the first MBS session.

Specifically, the paging may be understood with reference to the foregoing descriptions, and details are not described herein again.

In this application, the network device flexibly manages the state of the receive end of the first MBS session by sending the broadcast information and performing paging, so that resource overheads required by the network device to keep the receive end of the first MBS session in a state for a long time is reduced, and data processing efficiency is further improved.

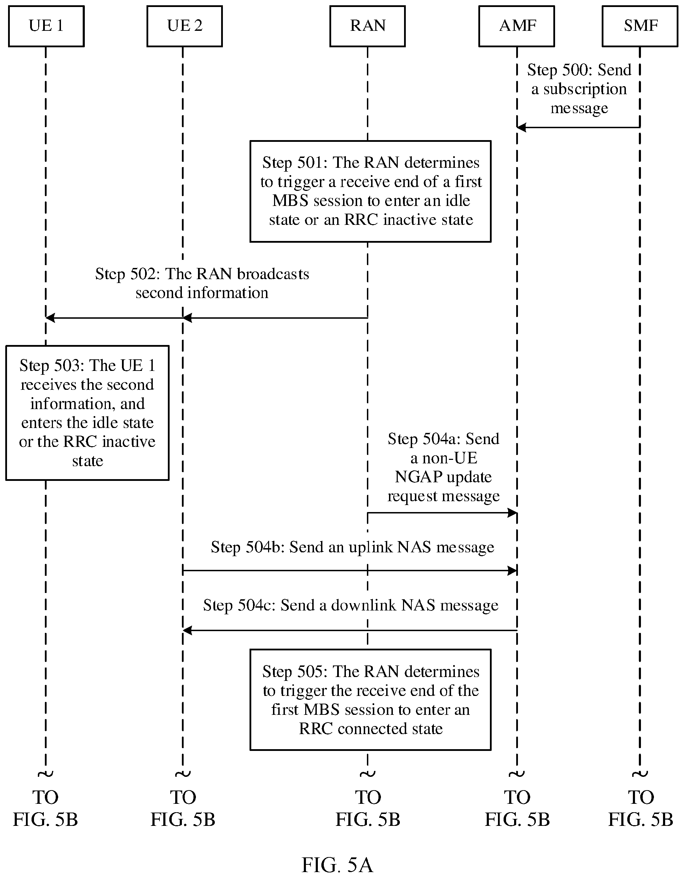

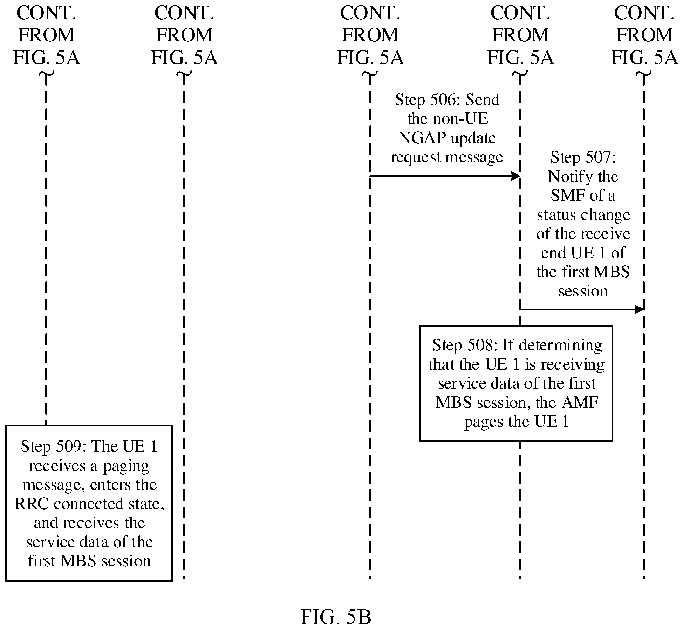

FIG. 5A and FIG. 5B show another communication method. An AMF may subscribe to a message from an SMF to obtain a state of a receive end of a first MBS session. For description, refer to FIG. 5A and FIG. 5B. Network elements in FIG. 5A and FIG. 5B include a UE 1, a UE 2, a RAN, the AMF, and the SMF. Certainly, in actual application, another network element may be further involved. This is not specifically limited in this application. The UE 1 is the receive end of the first MBS session. In actual application, another receive end of the first MBS session may be further involved. Herein, only the UE 1 is used as an example for description. For another receive end of the first MBS session, refer to steps of the UE 1. The UE 2 is a terminal that does not join in a network or does not join in any MBS session. Details are as follows:

Step 500: The SMF sends a subscription message to the AMF.

Specifically, when the state of the receive end of the first MBS session changes, the SMF sends the subscription message to notify the AMF of the current state of the receive end of the first MBS session in a timely manner. Optionally, the subscription message includes a TMGI corresponding to the first MBS session.

If the RAN determines that a second preset condition is met, step 501 may be performed.

Step 501: The RAN determines to trigger the receive end of the first MBS session to enter an idle state or an RRC inactive state.

Step 502: The RAN broadcasts second information, where the second information is used to trigger the UE 1 to enter the idle state or the RRC inactive state.

Refer to the foregoing descriptions of the second information. Details are not described herein again.

Step 503: The UE 1 receives the second information, and enters the idle state or the RRC inactive state.

Because the RAN triggers the UE 1 to enter the idle state or the RRC inactive state, a current state of the UE 1 is unknown to the AMF. Therefore, the RAN sends a non-UE NGAP message (504a) to the AMF, to notify the AMF of an operation that can be performed based on the current state of the UE 1 (for example, for the UE 1 or for another UE (not a receive end of the first MBS session)). Because the UE 2 subsequently sends signaling (504b) of the first MBS session or (another) MBS session to the AMF, the AMF may perform rejection operation processing (504c) based on step 504a.

Step 504a: The RAN sends a non-UE next generation application protocol (non-UE next generation application protocol, Non-UE NGAP) update request message to the AMF.

Specifically, the non-UE NGAP update request message may include one or more items of the following information:
Information 1: Access information for blocking an MBS, where the access information for blocking an MBS may indicate the AMF to reject related signaling of all MBSs.
Information 2: TMGI information for blocking an MBS, where the TMGI information for blocking an MBS may indicate the AMF to reject related signaling of the MBS corresponding to the TMGI.

Step 504b: The UE 2 sends an uplink NAS message to the AMF.

Specifically, the uplink NAS message includes the TMGI corresponding to the first MBS session. In actual application, the TMGI may alternatively correspond to another MBS session. Herein, only the first MBS session is used as an example, and this is not specifically limited.

Step 504c: The AMF sends a downlink NAS message to the UE 2.

Specifically, the downlink NAS message may include fourth information, where the fourth information is used to notify that a terminal that does not access a network is prohibited from joining in any MBS session or the first MBS session, or a terminal that does not join in any MBS session is prohibited from joining in any MBS session or the first MBS session. In addition, the downlink RRC message further includes a back-off timer, to prevent the UE 2 from continuously sending an uplink RRC message, resulting in increasing data processing load of the RAN.

If the RAN determines that a first preset condition is met, step 505 may be performed.

Step 505: The RAN may determine to trigger the receive end of the first MBS session to enter an RRC connected state.

Step 506: The RAN sends the non-UE NGAP update request message to the AMF.

Specifically, the non-UE NGAP update request message may include one or more items of the following information:
Information 1: Access information for stopping blocking an MBS, where the access information for stopping blocking an MBS may indicate the AMF not to reject related signaling of all MBSs.
Information 2: TMGI information for stopping blocking an MBS, where the TMGI information for stopping blocking an MBS may indicate the AMF not to reject related signaling of the MBS corresponding to the TMGI.

Step 507: The AMF notifies the SMF of a state change of the receive end of the first MBS session.

Step 508: If determining that the UE 1 is receiving service data of the first MBS session, the AMF pages the UE 1.

Step 509: The UE 1 receives a paging message, enters the RRC connected state, and receives the service data of the first MBS session.

Specifically, the paging may be understood with reference to the foregoing descriptions, and details are not described herein again.

In this application, the state change of the receive end of the first MBS session is notified to a session management network element through a subscription message, so that the session management network element can learn of the state change of the receive end of the first MBS session in a timely manner. The network device flexibly manages the state of the receive end of the first MBS session by sending the broadcast information and performing paging, so that resource overheads required by the network device to keep the receive end of the first MBS session in a state for a long time is reduced, and data processing efficiency is further improved.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software function unit.

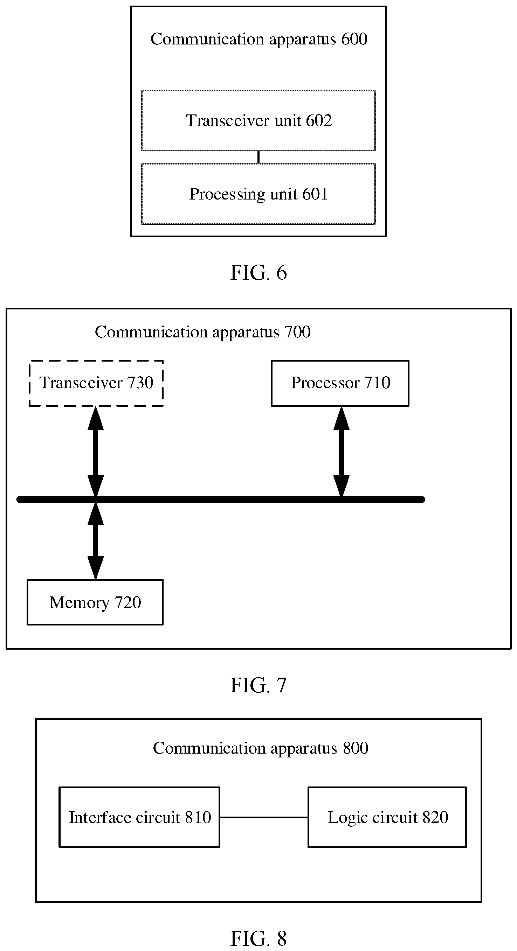

When an integrated unit is used, FIG. 6 is a possible example block diagram of a communication apparatus according to an embodiment of this application. As shown in FIG. 6, the communication apparatus 600 may include a processing unit 601 and a transceiver unit 602. The processing unit 601 is configured to control and manage an action of the communication apparatus 600. The transceiver unit 602 is configured to support the communication apparatus 600 in communicating with another device. Optionally, the transceiver unit 602 may include a receiving unit and/or a sending unit that are respectively configured to perform a receiving operation and a sending operation. Optionally, the communication apparatus 600 may further include a storage unit, configured to store program code and/or data of the communication apparatus 600. The transceiver unit may be referred to as an input/output unit, a communication unit, or the like. The transceiver unit may be a transceiver. The processing unit may be a processor. When the communication apparatus is a module (for example, a chip) in a communication device, the transceiver unit may be an input/output interface, an input/output circuit, an input/output pin, or the like, and may alternatively be referred to as an interface, a communication interface, an interface circuit, or the like; and the processing unit may be a processor, a processing circuit, a logic circuit, or the like. Specifically, the apparatus may be the access network device, the multicast/broadcast session management network element, the session management network element, or the like.

In an embodiment, the processing unit 601 is configured to determine to trigger a receive end of a first MBS session to enter an RRC connected state. The transceiver unit 602 is configured to broadcast first information used to trigger the receive end to enter the RRC connected state, or page the receive end.

In an optional embodiment, the first information includes identification information of the first MBS session and/or first indication information. The first indication information indicates that the receive end of the first MBS session is allowed to enter the RRC connected state.

In an optional embodiment, the transceiver unit 602 is specifically configured to send a paging message, where the paging message carries a TMGI corresponding to the first MBS session.

In an optional embodiment, the communication apparatus is an access network device or a mobility management network element.

In an optional embodiment, when a first preset condition is met, the processing unit 601 is configured to determine to trigger the receive end of the first MBS session to enter the RRC connected state. Alternatively, when a first preset condition is met and there is at least one terminal that is in an idle state or an RRC inactive state in the receive end, the processing unit 601 is configured to determine to trigger the receive end of the first MBS session to enter the RRC connected state.

In an optional embodiment, the first preset condition includes one or more of the following:
load of the network device is lower than a preset threshold; the receive end of the first MBS session triggers a cross-network device handover procedure; a service requirement of the first MBS session changes; a priority of the first MBS session is higher than a preset value; a reliability requirement of the first MBS session is higher than a first threshold; a delay of the first MBS session is less than a second threshold; and an allocation and retention priority ARP of the first MBS session is less than a third threshold. The reliability requirement of the first MBS session is a reliability requirement of a 5QI that is of a QoS flow of the first MBS session and whose reliability requirement is the highest. The delay of the first MBS session is a delay of a 5QI that is of a QoS flow of the first MBS session and whose delay is the lowest. The ARP of the first MBS session is an ARP of a QoS flow that is of the first MBS session and whose ARP is the lowest.

In an optional embodiment, the transceiver unit 602 is further configured to send second information, where the second information is used to trigger the receive end to enter the idle state or the RRC inactive state.

In an optional embodiment, the second information includes the identification information of the first MBS session and/or second indication information. The second indication information indicates that the receive end of the first MBS session is allowed to enter the idle state or the RRC inactive state.

In an optional embodiment, the transceiver unit 602 is further configured to broadcast third information, where the third information is used to notify the receive end that entering the RRC connected state is prohibited or receiving the service data of the first MBS session in the idle state or the RRC inactive state is allowed.

In an optional embodiment, the third information includes the identification information of the first MBS and/or third indication information. The third indication information indicates that the receive end of the first MBS session is prohibited from entering the RRC connected state, or that the receive end of the first MBS session is allowed to receive the service data of the first MBS session in the idle state or the RRC inactive state.

In an optional embodiment, the transceiver unit 602 is further configured to broadcast fourth information, where the fourth information is used to notify that a terminal that does not access a network is prohibited from joining in any MBS session or the first MBS session, or a terminal that does not join in any MBS session is prohibited from joining in any MBS session or the first MBS session, or a terminal that does not join in the first MBS session is prohibited from joining in the first MBS session.

In an optional embodiment, the fourth information includes join prohibition indication information. The join prohibition indication information indicates that joining in any MBS session is prohibited.

In an optional embodiment, the fourth information includes an identifier of the first MBS session.

In an embodiment, the transceiver unit 602 is configured to receive the first information, where the first information is used to trigger the receive end of the first MBS session to enter the RRC connected state. The receive end is a terminal that already joins in the first MBS session. If the communication apparatus is in the idle state or the RRC inactive state, and the communication apparatus belongs to the receive end, the processing unit 601 is configured to enter the RRC connected state based on the first information.

In an optional embodiment, the transceiver unit 602 is configured to receive the second information, where the second information is used to trigger the receive end to enter the idle state or the RRC inactive state. If the communication apparatus is in the RRC connected state, and the communication apparatus belongs to the receive end, the processing unit 601 is configured to enter the idle state or the RRC inactive state based on the second information.

In an optional embodiment, the transceiver unit 602 is configured to receive the third information, where the third information is used to notify the receive end that entering the RRC connected state is prohibited or receiving the service data of the first MBS session in the idle state or the RRC inactive state is allowed. If the communication apparatus is in the idle state or the RRC inactive state, and the communication apparatus belongs to the receive end, the processing unit 601 is configured to skip entering the RRC connected state based on the third information. Alternatively, if the communication apparatus is in the idle state or the RRC inactive state, and the communication apparatus belongs to the receive end, the processing unit 601 is configured to receive the service data of the first MBS session in the idle state or the RRC inactive state based on the third information.

In an embodiment, the transceiver unit 602 is configured to receive the fourth information, where the fourth information may be used to notify that a terminal that does not access a network is prohibited from joining in any MBS session or the first MBS session, or a terminal that does not join in any MBS session is prohibited from joining in any MBS session or the first MBS session, or a terminal that does not join in the first MBS session is prohibited from joining in the first MBS session. If the communication apparatus does not access the network, the processing unit 601 is configured to skip sending, based on the fourth information, a request for joining in any MBS session or the first MBS session. Alternatively, if the communication apparatus does not join in any MBS session, the processing unit 601 is configured to skip sending, based on the fourth information, a request for joining any MBS session or the first MBS session. Alternatively, if the communication apparatus does not join in the first MBS session, the processing unit 601 is configured to skip sending, based on the fourth information, a request for joining in the first MBS session.

In an optional embodiment, the fourth information includes the join prohibition indication information. The join prohibition indication information indicates that joining in any MBS session is prohibited.

In an optional embodiment, the fourth information includes the identifier of the first MBS session.

As shown in FIG. 7, this application further provides a communication apparatus 700. The communication apparatus 700 may be a chip or a chip system. The communication apparatus may be located in a device in any one of the foregoing method embodiments, for example, an access network device or an AMF, to perform an action corresponding to the device.

Optionally, the chip system may include a chip, or may include a chip and another discrete component.

The communication apparatus 700 may include a processor 710.

The processor 710 is configured to execute computer program stored in a memory 720, to implement actions of the devices in any one of the foregoing method embodiments.

The communication apparatus 700 may further include the memory 720, configured to store the computer program.

Optionally, the memory 720 is coupled to the processor 710. The coupling is indirect coupling or a communication connection between apparatuses, units, or modules for information exchange between the apparatuses, the units, or the modules, and may be in electrical, mechanical, or other forms. Optionally, the memory 720 is integrated with the processor 710.

There may be one or more processors 710 and memories 720. This is not limited.

Optionally, in actual application, the communication apparatus 700 may include or may not include a transceiver 730. A dashed box is used for illustration in the figure. The communication apparatus 700 may exchange information with another device through the transceiver 730. The transceiver 730 may be a circuit, a bus, a transceiver, or any other apparatus that may be configured to exchange information.

In a possible implementation, the communication apparatus 700 may be applied to the access network device, the session management network element, or the mobility management network element.

A specific connection medium between the transceiver 730, the processor 710, and the memory 720 is not limited in this embodiment of this application. In this embodiment of this application, in FIG. 7, the memory 720, the processor 710, and the transceiver 730 are connected through a bus. The bus is represented by a thick line in FIG. 7. A connection manner between other components is merely an example for description, and is not limited thereto. The bus may be classified into an address bus, a data bus, a control bus, and the like. For ease of representation, only one bold line is used for representation in FIG. 7, but this does not mean that there is only one bus or only one type of bus. In embodiments of this application, the processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. Steps of the methods disclosed with reference to embodiments of this application may be directly executed and accomplished by a hardware processor, or may be executed and accomplished by using a combination of hardware and software modules in the processor.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random-access memory, RAM). Alternatively, the memory may be any other medium that can be configured to carry or store expected program code in a form of an instruction or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, refer to FIG. 8. An embodiment of this application further provides another communication apparatus 800, including an interface circuit 810 and a logic circuit 820. The interface circuit 810 may be understood as an input/output interface, and may be configured to perform the receiving and sending steps in the foregoing method embodiments, for example, step 202A. A network device broadcasts broadcast steps in first information used to trigger a receive end to enter an RRC connected state. Details are not described herein again in this application. The logic circuit 820 may be configured to run code instructions to perform the method according to any one of the foregoing embodiments. Details are not described herein again in this application.

Based on the foregoing embodiments, an embodiment of this application further provides a computer-readable storage medium. The computer-readable storage medium stores instructions. When the instructions are executed, the communication method according to any one of the foregoing method embodiments is implemented. The computer-readable storage medium may include: any medium that can store program code, such as a USB flash drive, a removable hard disk, a read-only memory, a random access memory, a magnetic disk, or an optical disc.

Based on the foregoing embodiments, an embodiment of this application provides a communication system. The communication system includes an access network device (for example, a RAN), a session management network element (for example, an SMF), and a mobility management network element (for example, an AMF), and may be configured to perform the method according to any one of the foregoing method embodiments.

In addition, the foregoing communication system further includes a terminal device (for example, a UE), and may exchange data with the access network device and the session management network element, to perform the method according to any one of the foregoing method embodiments.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, comprising:
determining, by a network device, to trigger a receive end of a first multicast/broadcast service MBS session to enter a radio resource control RRC connected state; and
broadcasting, by the network device, first information used to trigger the receive end to enter the RRC connected state, or paging the receive end.

2. The method according to claim 1, wherein the first information comprises identification information of the first MBS session and/or first indication information, and the first indication information indicates that the receive end of the first MBS session is allowed to enter the RRC connected state.

3. The method according to claim 1, wherein the paging the receive end comprises:
sending, by the network device, a paging message, wherein the paging message carries a temporary mobile group identity TMGI corresponding to the first MBS session.

4. The method according to any one of claims 1 to 3, wherein the network device is an access network device or a mobility management network element.

5. The method according to any one of claims 1 to 4, wherein the determining, by a network device, to trigger a receive end of a first MBS session to enter an RRC connected state comprises:
when a first preset condition is met, determining, by the network device, to trigger the receive end of the first MBS session to enter the RRC connected state; or
when a first preset condition is met and there is at least one terminal that is in an idle state or an RRC inactive state in the receive end, determining, by the network device, to trigger the receive end of the first MBS session to enter the RRC connected state.

6. The method according to claim 5, wherein the first preset condition comprises one or more of the following:
load of the network device is lower than a preset threshold;
the receive end of the first MBS session triggers a cross-network device handover procedure;
a service requirement of the first MBS session changes;
a priority of the first MBS session is higher than a preset value;
a reliability requirement of the first MBS session is higher than a first threshold;
a delay of the first MBS session is lower than a second threshold; and
an allocation and retention priority ARP of the first MBS session is lower than a third threshold, wherein
the reliability requirement of the first MBS session is a reliability requirement of a 5th generation 5G QoS identifier 5QI that is of a quality of service QoS flow of the first MBS session and whose reliability requirement is the highest; the delay of the first MBS session is a delay of a 5QI that is of a QoS flow of the first MBS session and whose delay is the lowest; and the ARP of the first MBS session is an ARP of a QoS flow that is of the first MBS session and whose ARP is the lowest.

7. The method according to any one of claims 1 to 6, wherein the method further comprises:
sending, by the network device, second information, wherein the second information is used to trigger the receive end to enter the idle state or the RRC inactive state.

8. The method according to claim 7, wherein the second information comprises the identification information of the first MBS session and/or second indication information, and the second indication information indicates that the receive end of the first MBS session is allowed to enter the idle state or the RRC inactive state.

9. The method according to any one of claims 1 to 8, wherein the method further comprises:
broadcasting, by the network device, third information, wherein the third information is used to notify the receive end that entering the RRC connected state is prohibited or receiving service data of the first MBS session in the idle state or the RRC inactive state is allowed.

10. The method according to claim 9, wherein the third information comprises the identification information of the first MBS session and/or third indication information, and the third indication information indicates that the receive end of the first MBS session is prohibited from entering the RRC connected state, or that the receive end of the first MBS session is allowed to receive the service data of the first MBS session in the idle state or the RRC inactive state.

11. The method according to any one of claims 1 to 10, wherein the method further comprises:
broadcasting, by the network device, fourth information, wherein the fourth information is used to notify that a terminal that does not access a network is prohibited from joining in any MBS session or the first MBS session, or a terminal that does not join in any MBS session is prohibited from joining in any MBS session or the first MBS session, or a terminal that does not join in the first MBS session is prohibited from joining in the first MBS session.

12. The method according to claim 11, wherein the fourth information comprises join prohibition indication information, and the join prohibition indication information indicates that joining in any MBS session is prohibited.

13. The method according to claim 11, wherein the fourth information comprises an identifier of the first MBS session.

14. A communication method, comprising:
receiving, by a first terminal, first information, wherein the first information is used to trigger a receive end of a first MBS session to enter an RRC connected state, and the receive end is a terminal that already joins the first MBS session; and
if the first terminal is in an idle state or an RRC inactive state, and the first terminal belongs to the receive end, entering the RRC connected state based on the first information.

15. The method according to claim 14, wherein the method further comprises:
receiving, by the first terminal, second information, wherein the second information is used to trigger the receive end to enter the idle state or the RRC inactive state; and
if the first terminal is in the RRC connected state, and the first terminal belongs to the receive end, entering the idle state or the RRC inactive state based on the second information.

16. The method according to claim 14 or 15, wherein the method further comprises:
receiving, by the first terminal, third information, wherein the third information is used to notify the receive end that entering the RRC connected state is prohibited or receiving service data of the first MBS session in the idle state or the RRC inactive state is allowed; and
if the first terminal is in the idle state or the RRC inactive state, and the first terminal belongs to the receive end, skipping, by the first terminal, entering the RRC connected state based on the third information; or
if the first terminal is in the idle state or the RRC inactive state, and the first terminal belongs to the receive end, receiving, by the first terminal in the idle state or the RRC inactive state, the service data of the first MBS session based on the third information.

17. A communication method, comprising:
receiving, by a second terminal, fourth information, wherein the fourth information is used to notify that a terminal that does not access a network is prohibited from joining in any MBS session or a first MBS session, or a terminal that does not join in any MBS session is prohibited from joining in any MBS session or the first MBS session, or a terminal that does not join in the first MBS session is prohibited from joining in the first MBS session; and
if the second terminal does not access the network, skipping sending, based on the fourth information, a request for joining in any MBS session or the first MBS session; or
if the second terminal does not join in any MBS session, skipping sending, based on the fourth information, a request for joining in any MBS session or the first MBS session; or
if the second terminal does not join in the first MBS session, skipping sending, based on the fourth information, a request for joining in the first MBS session.

18. The method according to claim 17, wherein the fourth information comprises join prohibition indication information, and the join prohibition indication information indicates that joining in any MBS session is prohibited.

19. The method according to claim 17, wherein the fourth information comprises an identifier of the first MBS session.

20. A communication apparatus, comprising:
a processing unit, configured to determine to trigger a receive end of a first multicast/broadcast service MBS session to enter a radio resource control RRC connected state; and
a transceiver unit, configured to: broadcast first information used to trigger the receive end to enter the RRC connected state, or page the receive end.

21. The apparatus according to claim 20, wherein the first information comprises identification information of the first MBS session and/or first indication information, and the first indication information indicates that the receive end of the first MBS session is allowed to enter the RRC connected state.

22. The apparatus according to claim 20, wherein the transceiver unit is specifically configured to:
send a paging message, wherein the paging message carries a temporary mobile group identity TMGI corresponding to the first MBS session.

23. The apparatus according to any one of claims 20 to 22, wherein the communication apparatus is an access network device or a mobility management network element.

24. The apparatus according to any one of claims 20 to 23, wherein the processing unit is specifically configured to:
when a first preset condition is met, determine to trigger the receive end of the first MBS session to enter the RRC connected state; or
when a first preset condition is met and there is at least one terminal that is in an idle state or an RRC inactive state in the receive end, determine to trigger the receive end of the first MBS session to enter the RRC connected state.

25. The apparatus according to claim 24, wherein the first preset condition comprises one or more of the following:
load of the communication apparatus is lower than a preset threshold;
the receive end of the first MBS session triggers a cross-network device handover procedure;
a service requirement of the first MBS session changes;
a priority of the first MBS session is higher than a preset value;
a reliability requirement of the first MBS session is higher than a first threshold;
a delay of the first MBS session is lower than a second threshold; and
an allocation and retention priority ARP of the first MBS session is lower than a third threshold, wherein
the reliability requirement of the first MBS session is a reliability requirement of a 5th generation 5G QoS identifier 5QI that is of a quality of service QoS flow of the first MBS session and whose reliability requirement is the highest; the delay of the first MBS session is a delay of a 5QI that is of a QoS flow of the first MBS session and whose delay is the lowest; and the ARP of the first MBS session is an ARP of a QoS flow that is of the first MBS session and whose ARP is the lowest.

26. The apparatus according to any one of claims 20 to 25, wherein the transceiver unit is further configured to:
send second information, wherein the second information is used to trigger the receive end to enter the idle state or the RRC inactive state.

27. The apparatus according to claim 26, wherein the second information comprises the identification information of the first MBS session and/or second indication information, and the second indication information indicates that the receive end of the first MBS session is allowed to enter the idle state or the RRC inactive state.

28. The apparatus according to any one of claims 20 to 27, wherein the transceiver unit is further configured to:
broadcast third information, wherein the third information is used to notify the receive end that entering the RRC connected state is prohibited or receiving service data of the first MBS session in the idle state or the RRC inactive state is allowed.

29. The apparatus according to claim 28, wherein the third information comprises the identification information of the first MBS session and/or third indication information, and the third indication information indicates that the receive end of the first MBS session is prohibited from entering the RRC connected state, or that the receive end of the first MBS session is allowed to receive the service data of the first MBS session in the idle state or the RRC inactive state.

30. The apparatus according to any one of claims 20 to 29, wherein the transceiver unit is further configured to:
broadcast fourth information, wherein the fourth information is used to notify that a terminal that does not access a network is prohibited from joining in any MBS session or the first MBS session, or a terminal that does not join in any MBS session is prohibited from joining in any MBS session or the first MBS session, or a terminal that does not join in the first MBS session is prohibited from joining in the first MBS session.

31. The apparatus according to claim 30, wherein the fourth information comprises join prohibition indication information, and the join prohibition indication information indicates that joining in any MBS session is prohibited.

32. The apparatus according to claim 30, wherein the fourth information comprises an identifier of the first MBS session.

33. A communication apparatus, comprising:
a transceiver unit, configured to receive first information, wherein the first information is used to trigger a receive end of a first MBS session to enter an RRC connected state, and the receive end is a terminal that already joins the first MBS session; and
if the communication apparatus is in an idle state or an RRC inactive state, and the communication apparatus belongs to the receive end, a processing unit is configured to enter the RRC connected state based on the first information.

34. The apparatus according to claim 33, wherein the transceiver unit is further configured to:
receive second information, wherein the second information is used to trigger the receive end to enter the idle state or the RRC inactive state; and
the processing unit is configured to: if the communication apparatus is in the RRC connected state, and the communication apparatus belongs to the receive end, enter the idle state or the RRC inactive state based on the second information.

35. The apparatus according to claim 33 or 34, wherein the transceiver unit is further configured to:
receive third information, wherein the third information is used to notify the receive end that entering the RRC connected state is prohibited or receiving service data of the first MBS session in the idle state or the RRC inactive state is allowed; and
if the communication apparatus is in the idle state or the RRC inactive state, and the communication apparatus belongs to the receive end, skip entering the RRC connected state based on the third information; or
if the communication apparatus is in the idle state or the RRC inactive state, and the communication apparatus belongs to the receive end, receive the service data of the first MBS session in the idle state or the RRC inactive state based on the third information.

36. A communication apparatus, comprising:
a transceiver unit, configured to receive fourth information, wherein the fourth information is used to notify that a terminal that does not access a network is prohibited from joining in any MBS session or a first MBS session, or a terminal that does not join in any MBS session is prohibited from joining in any MBS session or the first MBS session, or a terminal that does not join in the first MBS session is prohibited from joining in the first MBS session; and
if the communication apparatus does not access the network, a processing unit is configured to skip sending, based on the fourth information, a request for joining in any MBS session or the first MBS session; or
if the communication apparatus does not join in any MBS session, a processing unit is configured to skip sending, based on the fourth information, a request for joining in any MBS session or the first MBS session; or
if the communication apparatus does not join in the first MBS session, a processing unit is configured to skip sending, based on the fourth information, a request for joining in the first MBS session.

37. The apparatus according to claim 36, wherein the fourth information comprises join prohibition indication information, and the join prohibition indication information indicates that joining in any MBS session is prohibited.

38. The apparatus according to claim 37, wherein the fourth information comprises an identifier of the first MBS session.

39. A communication apparatus, comprising at least one processor and a memory, wherein
the memory is configured to store a computer program or instructions; and
the at least one processor is configured to execute the computer program or the instructions, so that the method according to any one of claims 1 to 13, any one of claims 14 to 16, or any one of claims 17 to 19 is performed.

40. A chip system, wherein the chip system comprises a processing circuit, and the processing circuit is coupled to a storage medium; and
the processing circuit is configured to execute a part of or all computer programs or instructions in the storage medium, and when the part of or all computer programs or instructions are executed, the processing circuit is configured to perform the method according to any one of claims 1 to 13, any one of claims 14 to 16, or any one of claims 17 to 19.

41. A computer-readable storage medium, wherein the computer-readable storage medium stores instructions, and when the instructions are executed by a computer, the method according to any one of claims 1 to 13, any one of claims 14 to 16, or any one of claims 17 to 19 is performed.

42. A computer program product comprising a computer program or instructions, wherein when the computer program product runs on a computer, the method according to any one of claims 1 to 13, any one of claims 14 to 16, or any one of claims 17 to 19 is performed.
